# EUROPÄISCHE PATENTSCHRIFT

(11) **EP 0 500 840 B1**
(45) Veröffentlichungstag und Bekanntmachung des Hinweises auf die Patenterteilung: **03.03.1999**
(21) Anmeldenummer: 91914795.9
(22) Anmeldetag: 24.08.1991
(51) Int. Cl.: C04B 28/02, C04B 7/345

(54) **TECTOALUMOSILICAT-ZEMENT SOWIE VERFAHREN ZUR HERSTELLUNG DESSELBEN**
TECTOALUMINOSILICATE CEMENT AND PROCESS FOR PRODUCING IT
CIMENT EN TECTOSILICATE D'ALUMINIUM ET SON PROCEDE DE PRODUCTION

(30) Priorität: 03.09.1990 CH 2849/90
(43) Veröffentlichungstag der Anmeldung: 02.09.1992
(73) Patentinhaber: "HOLDERBANK" Financière Glarus AG, 8750 Glarus (CH)
(72) Erfinder: SCHWARZ, Wolfgang, A-1080 Wien (AT); LERAT, André, B-7000 Mons (BE)
(74) Vertreter: Roshardt, Werner Alfred, Dipl.-Phys.
(86) Internationale Anmeldenummer: EP9101607
(87) Internationale Veröffentlichungsnummer: WO9204300

(56) Entgegenhaltungen:
- DE-A- 3 800 776
- US-A- 4 153 655
- US-A- 4 640 715
- US-A- 4 642 137
- CHEMICAL ABSTRACTS, vol. 111, no. 10, 4. September 1989, Columbus, Ohio, US; abstract no. 83145K, P.V.KRIVENKO ET AL.: 'Study of hydration of glass-like analogs of the calcium oxide-aluminum oxide-silicon dioxide system in the presence of alkali metal compounds.' Seite 327 ;

## Beschreibung

Die Erfindung betrifft eine portlandzementfreie Bindemittelmatrix, ein Verfahren zur Herstellung einer solchen Bindemittelmatrix, einen Tectoalumosilicat-Zement zur Herstellung der im wesentlichen portlandzementfreien Bindemittelmatrix sowie einen Beton mit einer solchen Bindemittelmatrix.

In der US 4.642.137 (Heitzmann) ist ein mineralisches Bindemittel für Portlandzement beschrieben. Für die Verwendung im Zusammenhang mit Portlandzement wird eine Bindemittelzusammensetzung mit 100 Teilen Metakaolin, 70-215 Teilen amorphe Silica, 85-130 Teilen Flugasche/calcinierter Schiefer/calcinierter Ton, 20-70 Teilen Schlacke und 55-145 Teilen Kaliumsilicat + KOH vorgeschlagen. Zur Herstellung eines Mörtels werden z.B. etwa 350 Teile des Bindemittels, ca. 350 Teile Portlandzement und 1630 Teile Sand gemischt. Ferner werden geringe Mengen an Borax und eines ICI-Additivs und ca. 250 Teile Wasser zugegeben. Der Anteil von Kaliumsilicat soll bei der beschriebenen Zusammensetzung auf jeden Fall grösser als 55 Gewichtsteile sein. Der Kern der Lehre dieser Druckschritt liegt darin, dass die Alkalimetallsilicate zu einem wesentlichen Teil durch amorphe Silica ersetzt werden.

Ein weiteres, für Portlandzement vorgesehenes, mineralisches Bindemittel ist der US 4.640.715 (Heitzmann) zu entnehmen. Zur Maximierung der Langzeitfestigkeiten werden grössere Mengen feinverteilte Silica zugegeben. Das trockene mineralische Bindemittel hat folgende Zusammensetzung: 6-25, insbesondere 15-25 Gewichtsteile Metakaolin, 1-150, insbesondere 50-100 Gewichtsteile feinverteilte Silica, 0-60, insbesondere 20-30 Gewichtsteile Flugasche/calcinierter Schiefer und/oder calcinierter Ton, 0-18, insbesondere 10-15 Gewichtsteile Schlacke, 3-30, insbesondere 5-12 Gewichtsteile KOH. Es ist zu beachten, dass kein Alkalisilicat verwendet wird.

Aufgabe der Erfindung ist es, eine Bindemittelmatrix mit hoher mechanischer, chemischer und mineralogischer Beständigkeit anzugeben.

Die Lösung der Aufgabe ist durch die Merkmale des Anspruchs 1 definiert. Weiter ist im Anspruch 16 ein Verfahren zur Herstellung einer portlandzementfreien Bindemittelmatrix mit der Summenformel

(Li,Na)₀₋₇K₁₋₆Mg₁₋₀Ca₃₋₀[A₁₄Si₆₋₁₄O₂₁₋₃₆] x (0-15H₂0)

und mit Tectosilicatmikrokristallen angegeben, welche sich aus einem Tectoalumosilicat-Zement, enthaltend K, Ca und Alumosilicate sowie gegebenenfalls Li, Na und Mg in einer Umsetzung mit H₂O im Verhältnis 3:1 bis 6:1 ergeben, wobei der Tectoalumosilicat-Zement mit den Bestandteilen gemäss Anspruch 1 gebildet ist. Der erfindungsgemässe Tectoalumosilicat-Zement ist im Anspruch 24 definiert, der entsprechende Beton im Anspruch 29.

Der wesentliche Unterschied zu den bekannten Bindemitteln liegt darin, dass eine Tectoalumosilicat-Struktur erzeugt wird. Das erfindungsgemässe Bindemittel basiert nicht auf Portlandzement. Die bei der hydraulischen Verfestigung von Portlandzement ablaufende Puzzolan-Reaktion führt nämlich nicht zur gesuchten Tectoalumosilicat-Struktur. Bei den erfindungsgemässen Bindemittelzusammensetzungen haben die dehydroxilierten Phyllosilicate (z.B. das Metakaolin) eine chemisch-reaktive Funktion, die bei den bekannten hydraulischen Bindemitteln nicht (oder nur in unbrauchbar keinem Ausmass) vorhanden ist.

Die erfindungsgemässe Bindemittelmatrix auf Basis von Tectoalumosilicat-Zement ist als frühhochfestes anorganisches hydraulisches Bindemittel verwendbar. Sie zeichnet sich gegenüber herkömmlichen hydraulisch erhärtenden Bindemitteln wie z.B. Portlandzement, Tonderdeschmelz-Zement und dergl. durch die Kombination hoher mechanischer, chemischer und mineralogischer Beständigkeit aus, die im Einzelnen nur von Spezialzementen erreicht werden.

Die Eigenschaften der erfindungsgemässen Bindemittelmatrix resultieren aus dem dichten Gefüge von kryptokristallinen xenomorphen Mikrokristallen in einer perlitischen Matrix und aus deren chemisch-physikalischen Zusammensetzung. Das dichte perlitische Gefüge führt zu einer minimalen Porosität und Permeabilität sowie zu einer optimalen mechanischen Belastbarkeit.

Im Unterschied zu herkömmlichen hydraulischen Bindemitteln sind die Poren, soweit vorhanden, geschlossen (d.h. die Poren sind untereinander nicht verbunden) und statistisch verteilt. Die Mikrokristalle (die mineralischen Komponenten) haben einander ähnliche physikalische und chemische Eigenschaften. Bei mechanischer Belastung treten daher keine bevorzugten Risszonen auf. Die Verflechtung der Mikrokristalle ergibt jedoch eine den herkömmlichen hydraulischen Bindern vergleichbare Flexibilität.

Im Unterschied zur erfindungsgemässen Bindemittelmatrix auf Basis von Tectoalumosilicat-Zement erfordert der Erhärtungsmechanismus herkömmlicher hydraulischer Zemente im wesentlichen eine Hydratation, d.h. es verbleibt in der Bindemittelmatrix ein Wasserüberschuss, der deren ihre inhärente Porosität und Permeabilität bestimmt.

In den bei Umgebungstemperatur (-5°C bis +30°C) erhärtenden herkömmlichen hydraulischen Bindemitteln besteht die Bindemittelmatrix ebenfalls aus ineinander verflochtenen Mikrokristallen, die jedoch, wie zum Beispiel im Portlandzementstein, in ihrer chemischen Zusammensetzung und Kristallstruktur sowie deren chemisch-physikalisch Eigenschaften sehr verschieden sind, oder deren Kristallphasen wie z.B. im Tonerdeschmelz-Zement metastabil sind.

Die erfindungsgemässe Bindemittelmatrix auf Basis von Tectoalumosilicat-Zement besteht aus Tectosilicatmikrokristallen, deren chemisch-physikalischen Eigenschaften sehr ähnlich sind, die sich aber in ihrer Kristallstruktur, ihren Eigenschaften und ihrer Bildungsweise deutlich von denen herkömmlicher hydraulischer Bindemittel unterscheiden.

Die erfindungsgemässe Bindemittelmatrix auf Basis von Tectoalumosilicat-Zement vereinigt die hohe mechanische Belastbarkeit, Impermeabilität und Korrosionsbeständigkeit keramischer Materialien mit der Flexibilität und den bei Umgebungstemperatur erzielbaren Frühfestigkeiten hydraulischer Spezialzemente.

Die erfindungsgemässe Bindemittelmatrix weist eine aussergewöhnlich hohe Temperaturbeständigkeit und mechanische Belastbarkeit auf. In Verbindung mit inerten Zuschlagstoffen wie z.B. Sand oder Kies erhält man einen Baustoff mit ungewöhnlich hohen Früh- und Endfestigkeiten.

Ein Standardmörtel auf Basis der erfindungsgemässen Bindemittelmatrix (Gewichtsverhältnis Zement/ISO-Sand = 1/3, Gewichtsverhältnis Wasser/Zement = 0.20 bis 0.30) bindet nach 15-30 min ab und erzielt eine Druckfestigkeit von mindestens 7 MPa nach 4 Stunden, mindestens 35 MPa nach 24 Stunden und mindestens 60 MPa nach 28 Tagen bei 20°C.

Die mit der erfindungsgemässen Bindemittelmatrix auf Basis von Tectoalumosilicat-Zement hergestellten Mörtel und Betone sind formstabiler, Frost- und Tausalz-beständiger, korrosionsbeständiger und schützen Baustahl besser vor Korrosion als mit Portlandzement oder Tonerdeschmelz-Zement hergestellte Mörtel und Betone.

Die erfindungsgemässe Bindemittelmatrix weist im Gegensatz zu herkömmlichen anorganischen Bindemitteln eine sehr geringe Porosität auf. Sie ist beständig und praktisch undurchdringlich gegenüber Wasser und organische Lösungsmittel wie Aceton, Alkohol usw. Sie ist beständig gegen verdünnte Säuren und Laugen, Salzlösungen usw. Die chemische Beständigkeit kann über das Gewichtsverhältnis Si/Al den Anforderungen angepasst werden.

Die erste Komponente des erfindungsgemässen Tectoalumosilicat-Zements, das dehydroxilierte Phyllosilicat, wird vorzugsweise durch Calcinieren von Phyllosilicaten im Temperaturbereich von 500°C bis 900°C erhalten. Durch das Calcinieren verlieren die Phyllosilicate nicht nur interstrukturell gebundenes Wasser, sondern auch die OH-Gruppen in den Silanol- (-Si-OH) und -Al-OH Gruppen, das Phyllosilicat wird also, verbunden mit einer Modifikation der Kristallstruktur, dehydroxiliert. Solche thermisch aktivierten Schicht- (Phyllo-)silicate, im allgemeinen Metakaolin, werden bereits seit dem Altertum (z.B. Romanzement) oder in Verbindung mit Portlandzement für die Herstellung von hydraulischen Bindemitteln verwendet. Der Metakaolin wird jedoch dort, im Unterschied zu dem erfindungsgemässen Verfahren, als puzzolanische Komponente analog zu den sogenannten Puzzolan-Zementen eingesetzt. In der Puzzolan-Reaktion bilden sich durch Reaktion mit während der Hydratation der silicatischen Portlandzementminerale freiwerdendem Calciumhydroxid hydratisierte Calciumketten- und Calciumbandsilicate und keine - oder in Gegenwart von Alkalikomponenten nur in sehr geringem Ausmass - Tectosilicate.

Für die zweite reaktive Komponente des erfindungsgemässen Tectoalumosilicat-Zements, reaktive Silica, können vorzugsweise dealuminierte Phyllosilicate, dealuminierte Flugaschen, thermisch Alkali-aktiviertes Alumosilicat, gegebenenfalls in calcinierten Tonen enthaltene feinkörnige kristalline Form von SiO₂, oder Mikrosilica verwendet werden, wobei unter Mikrosilica amorphe Kieselsäure (SiO₂ > 94%) mit einer Korngrösse von 0.1 bis 2.0 µm, wie sie z.B. bei der Stahlerzeugung anfällt, verstanden wird.

Dealuminierte Phyllosilicate werden durch Behandlung von Phyllosilicaten mit Salzsäure oder Schwefelsäure erhalten. Durch die Säurebehandlung werden die Al(OH)₃-Schichten als Aluminiumsalz herausgelöst. Als in Säure unlöslicher Rückstand bleibt eine hochporöse, an der Oberfläche vollständig hydratisierte, sehr reaktive Kieselsäure. Als Beispiel kann durch Kochen von Serpentin mit konzentrierter Salzsäure entstandenes "Gulsenit" von MAGINDAG, Veitscher Magnesitwerke AG, Austria, angeführt werden, ein Nebenprodukt der Erzeugung von Magnesiumchlorid und kaustischer Magnesia.

Durch Dealuminierung von Kohlekraftwerk-Flugaschen mittels Mineralsäuren kann ebenfalls ein reaktives Kieselsäuregel hergestellt werden.

Höher reaktive Kieselsäuren entstehen durch Behandlung von Ton mit Mineralsäuren (Mizusawa Industrial Chemicals Ltd., Japan). Das so erhaltene Kieselsäure-Gel hat einen Partikeldurchmesser von 0.1 bis 1.0 µm und lässt sich im Gegensatz zu Mikrosilica sehr leicht in alkalisch wässrigen Lösungen dispergieren.

Thermisch Alkali-aktiviertes Alumosilicat kann erfindungsgemäss durch Sintern von Natrium-, Kalium- und/oder Lithiumcarbonat mit einem Aluminiumsilicat (z.B. Kohlekraftwerk-Flug-asche) im Temperaturbereich von 800°C bis 1200°C erzeugt werden. Statt Alkalicarbonat können auch Alkalihydroxide und Alkalisalze eingesetzt werden, die im Sintertemperaturbereich Alkalioxide bilden. Als Flussmittel kann Borax oder Phosphat verwendet werden. Alkalikomponente und Aluminiumsilicatkomponente werden im Verhältnis 1:6 bis 1:1 miteinander vermischt (z.B. durch Vermahlen oder in einem Homogenisator) und mindestens bis zum vollständigen Sintern, gegebenenfalls bis zur Schmelze erhitzt. Die Schmelze bzw. das Sintergut wird möglichst rasch abgekühlt (abgeschreckt) und gemahlen.

Das thermisch Alkali-aktivierte Alumosilicat enthält reaktives lösliches Silicat und Natrium(Kalium)alumosilicatglas sowie kristallines Natrium(Kalium)alumosilicat (beispielsweise Carnegieit Na[AlSiO₄] bzw. Kaliophyllit K[AlSiO₄]). Es wirkt daher sowohl als reaktive Silicakomponente als auch als reaktives Alumosilicatglas.

Mikrosilica ist von den drei reaktiven Silicas das am wenigsten reaktive Material. Auch als "Silica Fume" bekannt, ist es ein in grossen Mengen anfallendes Abfallprodukt der Stahlerzeugung und ein gängiger Zuschlagstoff zu Portlandzement. Mikrosilica hat gegenüber thermisch Alkali-aktivierten Alumosilicaten und dealuminierten Phyllosilicaten den Nachteil, dass es auf Grund seiner geringen Reaktivität zu einem erheblichen Teil in der Bindemittelmatrix in Form sphärischer Agglomerate erhalten bleibt. Diese Agglomerate führen bei höherer Mikrosilica-Dosierung zu einem rapiden Abfall der mechanischen Festigkeiten. Dem Dosierbereich für Mikrosilica sind daher sehr enge Grenzen gesetzt, dies ist ein wesentlicher Nachteil der Verwendung von Mikrosilica, da unter anderem die chemische Beständigkeit der Tectosilicat-Bindemittelmatrix weitgehend durch das Verhältnis Si/Al bestimmt wird. Die geringe Reaktivität von Mikrosilica kann für langzeitreaktive Bindemittelmatrizen mit selbstheilenden Eigenschaften eingesetzt werden. Ein Vorteil von Mikrosilica ist seine Erhältlichkeit in grossen Mengen.

Die drei oben angeführten Materialien können als Einzelkomponenten oder in Kombination als "reaktive Silica"-Komponenten eingesetzt werden.

Die dritte reaktive Komponente ist ein reaktives Calciumalumosilicatglas, das vorzugsweise folgenden Bedingungen genügt: (i) molares Verhältnis von Ca/Si ≥ 1. (ii) Beim Kontakt mit alkalischen Lösungen von pH-Wert ≥ 13 bilden sich Calciumhydroxid und Alkali-Calcium-Tectosilicate. Folgende Materialien erfüllen beispielsweise die obigen Anforderungen: Hochofenschlacke, Stahlschlacken, Schmelzkammer-Flugaschen, wobei die Alumosilicatglas-Komponente teilweise durch thermisch Alkali-aktivierte Alumosilicate ersetzbar ist.

Basische Calciumsilicatverbindungen geben in alkalischem Milieu ebenfalls Ca²⁺ als Calciumhydroxid ab und können daher als langsame ("slow release") Quelle für Ca²⁺ verwendet werden. Die Geschwindigkeit der Abgabe von Ca²⁺ nimmt in der Reihenfolge Calciumalumosilicatglas < Calciumsilicatglas < Belit < Alit zu. Bei Verwendung von basischen Calciumsilicatverbindungen wird erfindungsgemäss als Alumosilicatglas-Komponente thermisch Alkali-aktiviertes Alumosilicat zugegeben.

Auf Grund der hohen Reaktivität von Belit und Alit ist es jedoch nur unter genau kontrollierten Bedingungen möglich, die Bildung von Ketten- und Bandsilicaten anstelle von Tectosilicaten zu verhindern.

Als vierte Komponente wird vorzugsweise ein Alkalisilicat der Formel (I)

a(M₂O) * x(SiO₂) * y(H₂O) (I)

mit M = Li, Na, K und a = 0-4 sowie x = 0-5 und y = 3-20 verwendet, das als wasserlöslicher Alkaliaktivator wirkt. Gute Ergebnisse werden mit Dikaliumtrisilicat (K₂O * 3SiO₂ * xH₂O) und KOH im Gewichtsverhältnis von 2:1 bis 4:1 erzielt. Es können jedoch auch Mischalkalisilicate bzw. Alkalisilicate in wässriger Lösung vom Typ Natronwasserglas und/oder Kaliwasserglas verwendet werden.

Nachstehend werden fünf Beispiele von verwendbaren Basisformulierungen für den Tectoalumosilicat-Zement gegeben.

### Formulierung 1

100 Gew.-Teile Dehydroxyliertes Phyllosilicat (z.B. Metakaolin)
30-50 Gew.-Teile Kaliumtrisilicat
50-75 Gew.-Teile amorphe Silica
50-80 Gew.-Teile basisches Calciumsilicat/Calciumalumosilicatglas
5-25 Gew.-Teile Kaliumhydroxid

### Formulierung 2

100 Gew.-Teile Dehydroxyliertes Phyllosilicat (z.B. Metakaolin)
10-30 Gew.-Teile Kaliumtrisilicat
50-75 Gew.-Teile dealuminiertes Phyllosilicat
50-80 Gew.-Teile basisches Calciumsilicat/Calciumalumosilicatglas
5-25 Gew.-Teile Kaliumhydroxid

### Formulierung 3

100 Gew.-Teile Dehydroxyliertes Phyllosilicat (z.B. Metakaolin)
15-50 Gew.-Teile Kaliumtrisilicat
100-400 Gew.-Teile thermisch Alkali-aktiviertes Alumosilicat
10-40 Gew.-Teile amorphe Silica
30-80 Gew.-Teile basisches Calciumsilicat/Calciumalumosilicatglas
5-35 Gew.-Teile Kaliumhydroxid

### Formulierung 4

100 Gew.-Teile Dehydroxyliertes Phyllosilicat (z.B. Metakaolin)
15-50 Gew.-Teile Kaliumtrisilicat
100-400 Gew.-Teile thermisch Alkali-aktiviertes Alumosilicat
10-40 Gew.-Teile dealuminiertes Phyllosilicat
30-80 Gew.-Teile basisches Calciumsilicat/Calciumalumosilicatglas
5-35 Gew.-Teile Kaliumhydroxid

### Formulierung 5

100 Gew.-Teile Dehydroxyliertes Phyllosilicat (z.B. Metakaolin)
20-60 Gew.-Teile Kaliumtrisilicat
50-150 Gew.-Teile thermisch Alkali-aktiviertes Alumosilicat
50-100 Gew.-Teile basisches Calciumsilicat/Calciumalumosilicatglas
5-25 Gew.-Teile Kaliumhydroxid

Die hydraulische Verfestigung des Tectoalumosilicat-Zements und ihr Produkt unterscheiden sich grundsätzlich vom Erhärtungsmechanismus der anorganischen Bindemittel auf der Basis von Alit (C3S), Belit (C2S), Puzzolanen, Tricalciumaluminat usw., bzw. vom Produkt dieses letzteren Erhärtungsmechanismus. Bei den herkömmlichen anorganischen Zementen erfolgt die Erhärtung im wesentlichen durch Hydratisierung der mineralischen Komponenten. Die Hydratisierung von Tricalciumaluminat (beim gipsfreien Portlandzement) und in weiterer Folge die Bildung von Ettringit (beim gewöhnlichen Portlandzement) ist für die Frühfestigkeit, die Hydratisierung der silicatischen Mineralkomponenten für die Folge- und Langzeitfestigkeit verantwortlich.

Die Hydratisierung von C3S verläuft unter Bildung von Calciumsilicathydrat-Gel bzw. nadelförmigen Calciumsilicathydrat-Kristallen (Tobermorit) und Freisetzung von Calciumhydroxid .

Die für die Dauerfestigkeit verantwortlichen Calciumsilicathydrat-Gele und -Kristalle sind Band- und Schichtsilicate, wie es in einer Reihe von Untersuchungen mit ²⁹Si-, ²⁷Al-MAS-NMR-Untersuchungen gezeigt werden konnte [G. Engelhardt, D.Michel, "High-Resolution Solid-State NMR of Silicates and Zeolites", John Wiley, New York, (1987)].

Die hydraulische Erhärtung des Tectoalumosilicat-Zements hingegen entspricht einer Kondensationsreaktion, bei der eine dreidimensionale Gerüstsilicat-Struktur entsteht, in der Si-Atome teilweise durch Al-Atome ersetzt sind.

Das Grundgerüst ist durch das dehydroxilierte Phyllosilicat vorgegeben. Die Dehydratisierung und Dehydroxilierung von Phyllosilicaten im Temperaturbereich von 500°C bis 850°C führt zu einer thermischen Aktivierung der Aluminiumsilicat-Struktur. Die Dehydratisierung und Dehydroxylierung (14% Gewichtsverlust bei Kaolin) erfolgt im allgemeinen ohne (oder nur mit einer unwesentlichen) Volumenkontraktion, ist aber mit einer Vergrösserung der spezifischen inneren Oberfläche um bis zu einem Faktor 5 verbunden.

Durch die Dehydroxilierung wird der ursprünglich geordnete schichtweise Aufbau der Silicat- und Aluminatlagen zerstört. Während die Struktur der Si₂O₅-Schichten zum grössten Teil erhalten bleibt, bricht die oktaedrische Struktur der Al(OH)₃-Schichten vollständig zusammen. Teilweise bilden sich kovalente Si-O-Al-Bindungen. Das Produkt ist teilweise röntgenamorph. ²⁷Al-MAS-NMR-Spektren zeigen Resonanzen, die tetraedrisch koordiniertem Al entsprechen (50-65 ppm gegen [Al(H₂0)₆]³⁺) und eine breite Resonanz bei 25-35 ppm, die von einigen Autoren 5-fach koordiniertem Al³⁺ zugeordnet wird.

Eine Reihe dehydroxilierter Phyllosilicate weist eine sogenannte Ueberstruktur auf, d.h. sie zeigen Röntgenreflexe, die geordneten grösseren Schichtabständen von 10 bis 27 Å entsprechen.

Dehydroxilierte Phyllosilicate verfügen daher über eine energiereiche und sehr reaktive Struktur. Sie werden in einer Reihe von Verfahren als Ausgangsprodukte für die Synthese von Zeoliten (die zur Familie der Tectosilicate gehören) eingesetzt. Zeolitsynthesen erfordern im allgemeinen Temperaturen von mindestens 80°C.

Neu am erfindungsgemässen Verfahren ist also insbesondere die Bildung von Tectosilicaten im Temperaturbereich von der Raumtemperatur bis unterhalb des Gefrierpunktes. Unter dem katalytischen Einfluss von Alkalien (LiOH, NaOH, KOH) und in Gegenwart von gelöstem SiO₂ (z.B. Kaliumsilicat) erfolgt über eine Reihe von Kondensationsreaktionen eine Neuordnung des Silicatgerüsts unter Bildung von sehr kleinen dreidimensional vernetzten Tectosilicaten. Im Laufe der Kondensationsreaktionen werden die Alkalien neutralisiert. SiO₂ und Al₂O₃ wirken formal als Säuren. Das Endprodukt ist nur noch schwach basisch.

²⁹Si- und ²⁷Al-MAS-NMR-Spektren des so erhaltenen Produktes zeigen ausschliesslich Resonanzen, die tetraedrisch koordiniertem Si und Al entsprechen. Die ²⁹Si-Resonanzlinie bei 94 ppm (gegen Tetramethylsilan) kann tetraedrisch koordiniertem Si mit 2-3 Al-Atomen (Si(3Al) 88-94 ppm, Si(2Al) 95-105 ppm) in der zweiten Koordinationssphäre zugeordnet werden. Das Resonanzmaximum bei 114 ppm entspricht tetraedrisch koordiniertem Si ohne Al Atome in den näheren Koordinationssphäre. Die ²⁷Al Resonanzlinie bei 53 ppm (gegen [Al(H₂0)₆]³⁺) entspricht eindeutig tetraedrisch koordiniertem Al, wie es in Feldspaten und Zeoliten gefunden wird.

Die relativ schmale Resonanzlinie im ²⁷Al-MAS-NMR und das Auftreten von 2 deutlich getrennten Resonanzen im ²⁹Si-MAS-NMR bestätigen die in Rasterelektronenmikroskopie und mittels optischer Mikroskopie beobachtete Mikrokristallinität (Nadeln und Prismen) und ist mit den in Alumosilicatgläsern beobachteten Resonanzen (breite, unstrukturierte Resonanzen) nicht vereinbar. Eine Aussage über den Typ bzw. eine Zuordnung zu einer spezifischen Gruppe von Tectosilicaten ist jedoch nicht möglich, das Bindemittel ist röntgenamorph, d.h. die Kristallite sind kleiner als 10 µm.

Demgegenüber entsprechen ²⁹Si-MAS-NMR Spektren von hydratisiertem Portlandzement eindeutig Ketten- und Band-Silicaten (²⁹Si, 77 ppm), die ²⁷Al-MAS-NMR Resonanzen oktaedrisch koordiniertem Al (3 ppm), wie es in den Calciumaluminathydraten zu finden ist.

Der Unterschied zu Bindemitteln auf der Basis von Portlandzement (Calciumsilicathydrat-Systeme) kommt noch deutlicher in thermographimetrischen (TG) und differentialthermographimetrischen (DTG) Aufnahmen des Kondensationsproduktes von Tectoalumosilicat-Zement zum Ausdruck. Im Differentialthermogramm wird ein Maximum bei ca 250°C und eine bis 1000°C auslaufende Schulter beobachtet, die der kontinuierlichen Abgabe von strukturell gebundenem Wasser entsprechen.

Das DTG von hydratisiertem Portlandzement zeigt dagegen eine Reihe von diskreten Maxima (100°C, 180°C, 320°C, 450°C).

Die dritte reaktive Komponente des Tectoalumosilicat-Zements, das schwach basische Calciumsilicatglas (z.B. basische Hochofenschlacke), dient im wesentlichen als Beschleuniger bzw. Aktivator. Das dehydroxilierte Phyllosilicat (2SiO₂ . Al₂O₃) reagiert zwar naturgemäss am schnellsten mit den löslichen Alkali-Silicaten, aber die Geschwindigkeit des Abbindens und der Festigkeitsentwicklung im Frühstadium des Erhärtungsprozesses wird durch die Calciumionen bestimmt. In Abwesenheit von Calciumionen, Calciumsilicaten bzw. Calciumaluminiumsilicaten bildet sich im ersten Stadium der Reaktion ein thixotropes Alumosilicatgel. In Gegenwart von Calciumionen, Calciumsilicaten bzw. Calciumaluminiumsilicaten erfolgt eine rasche Gelierung und damit Verfestigung der Bindemittelmatrix unter Bildung von Calciumalkalialumosilicaten.

Neu am erfindungsgemässen Verfahren ist also insbesondere die Möglichkeit, durch geeignete Wahl der Komponenten bzw. deren Mischungsverhältnisse die Abbindezeit in einem Bereich von 15 Minuten bis 8 Stunden, die Frühfestigkeiten 4 Stunden nach dem Abbinden in einem Bereich von 6 bis 20 MPa und die Erreichung der Endfestigkeiten in einem Bereich von 3 Tagen bis zu mehr als einem Jahr zu regeln.

Die chemische Beständigkeit der Bindemittelmatrix ist eine Funktion des Verhältnisses Si/Al und kann über die Dosierung der reaktiven Silicakomponente eingestellt werden. Das Verhältnis Si/Al muss jedoch grösser als 1,5 sein, um die Bildung der erfindungsgemässen Tectosilicatphasen zu gewährleisten.

Nachstehend werden Beispiele der Erfindung und Vergleichsbeispiele unter Bezugnahme auf die Zeichnung angegeben. Es zeigen:
Fig. 1 ein Diagramm der Temperaturbeständigkeit von Tectoalumosilicat-ISO-Mörtelprismen,
Fig. 2 ein Diagramm der Festigkeitsentwicklung bei 20°C, 60 % relative Feuchtigkeit,
Fig. 3 ein Diagramm der Dauerhaftigkeitsprüfungen in verschiedenen Medien,
Fig. 4 ein Diagramm der Formbeständigkeit und Alkali-Aggregat-Reaktion der Tectoalumosilicat-Bindemittelmatrix im Vergleich zu gewöhnlichem Portlandzement,
Fig. 5 ein thermographimetrisches und ein differentialthermographimetrisches Diagramm der Tectoalumosilicat-Bindemittelmatrix,
Fig. 6 ein thermographimetrisches und ein differentialthermographimetrisches Diagramm für gewöhnlichen Portland-Zementstein,
Fig. 7 ein ²⁹Si-MAS-NMR-Spektrum der Tectoalumosilicat-Bindemittelmatrix und von gewöhnlichem Portland-Zementstein (P50),
Fig. 8 ein ²⁷Al-MAS-NMR-Spektrum der Tectoalumosilicat-Bindemittelmatrix und von gewöhnlichem Portland-Zementstein (P50).

### BEISPIEL 1

Thermisch Alkali-aktiviertes Alumosilicat wurde auf folgende Weise hergestellt.

100 Gew.-Teile Kohlekraftwerk-Flugasche und 100 Gew.-Teile Natriumkarbonat wurden miteinander vermischt und bei 900°C eine Stunde lang gesintert. Das gesinterte, teilweise geschmolzene Produkt wurde innerhalb von 2 Minuten auf unter 100°C abgekühlt und auf eine Korngrösse < 15 µm gemahlen.

### Die Flugasche hatte folgende Zusammensetzung:

| | |
|---|---|
| SiO₂ | 52,55 Gew.-% |
| Al₂O₃ | 28,26 Gew.-% |
| Fe₂O₃ | 6,37 Gew.-% |
| CaO | 3,14 Gew.-% |
| MgO | 1,58 Gew.-% |
| Na₂O | 0,36 Gew.-% |
| K₂O | 3,84 Gew.-% |
| Rest | qs 100% |

### Die calcinierte Flugasche hatte folgende Zusammensetzung:

| | |
|---|---|
| SiO₂ | 31,42 Gew.-% |
| Al₂O₃ | 16,73 Gew.-% |
| Fe₂O₃ | 4,06 Gew.-% |
| CaO | 2,73 Gew.-% |
| MgO | 0,97 Gew.-% |
| Na₂O | 36,48 Gew.-% |
| K₂O | 2,38 Gew.-% |
| Rest | qs 100% |

Das Produkt ist hochporös mit einer mittleren Korngrösse von 1-2 µm. Es enthält 10 Gew.-% in destilliertem Wasser lösliche Anteile (Natriumsilicat, Natriumaluminat).

Die Charakterisierung durch Röntgendiffraktometrie ergab neben grösstenteils amorphen Anteilen das feldspatoide Natriumalumosilicat Carnegieit Na[AlSiO₄].

### BEISPIEL 2

- 65 Gew.-Teile: Metakaolin
- 40 Gew.-Teile: Thermisch Alkali-aktiviertes Alumosilicat aus Beispiel 1
- 25 Gew.-Teile: Dikaliumtrisilicat
- 50 Gew.-Teile: Hochofen-Schlacke
- 10 Gew.-Teile: Kaliumhydroxid
wurden 30 sec lang in einer Mischtrommel (Hobart Canada Inc., Model N-50) homogenisiert, 270 sec lang mit 55 Teilen Wasser und anschliessend 60 sec lang mit 450 Teilen Normsand (Iso-Sand, DIN 1164/Teil7) vermischt und die Masse in Standardformen (DIN 1164/Teil 7) abgefüllt. Die Masse erhärtete nach 2 Stunden. Nach 4 Stunden (d.h. 2 Stunden nach Erhärten) wurde eine Druckfestigkeit von 7 MPa, nach 24 Stunden eine Druckfestigkeit von 35 MPa und nach 3 Tagen eine Druckfestigkeit von 65 MPa gemessen.

Es wurden folgende Rohstoffe verwendet:

| | Metakaolin % | Silica fume % | Schlacke % | KS3 % | KOH % |
|---|---|---|---|---|---|
| SiO₂ | 54 | 94 | - | 39 | 66 |
| Al₂O₃ | 42 | - | 8 | - | - |
| K₂O | 2 | - | 0 | 34 | 84 |
| CaO | - | - | 40 | - | - |
| MgO | - | - | 11 | - | - |

### BEISPIEL 3

- 32 Gew.-Teile: Metakaolin
- 100 Gew.-Teile: Thermisch Alkali-aktiviertes Alumosilicat aus Beispiel 1
- 10 Gew.-Teile: Mikrosilica
- 16 Gew.-Teile: Dikaliumtrisilicat
- 25 Gew.-Teile: Hochofen-Schlacke
- 10 Gew.-Teile: Kaliumhydroxid
wurden wie in Beispiel 2 mit 45 Teilen Wasser gemischt. Die Masse erhärtete nach 1 Stunde. Nach 24 Stunden wurde eine Druckfestigkeit von 14 MPa und nach 4 Tagen eine Druckfestigkeit von 49 MPa gemessen.

### BEISPIEL 4

Ein dehydroxiliertes Phyllosilikat wurde durch Calcination eines Tonminerals auf folgende Weise hergestellt.

Ein sandiger Ton, bestehend aus Quarz und den Tonmineralien Illit und Kaolinit wurde bei 750°C calciniert und bis auf eine mittlere Korngrösse von 3.5 µm gemahlen.

### Chemische Zusammensetzung vor dem Calcinieren

| | |
|---|---|
| Glühverlust | 4,89 Gew.-% |
| SiO₂ | 79,57 Gew.-% |
| Al₂O₃ | 12,71 Gew.-% |
| Fe₂O₃ | 0,77 Gew.-% |
| CaO | Spuren |
| MgO | 0,24 Gew.-% |
| Na₂O | 0.08 Gew.-% |
| K₂O | 0,68 Gew.-% |
| Rest | qs 100% |

### BEISPIEL 5

- 300 Gew.-Teile: Calcinierter Ton aus Beispiel 4
- 80 Gew.-Teile: Dikaliumtrisilicat
- 210 Gew.-Teile: Hochofen-Schlacke
- 30 Gew.-Teile: Kaliumhydroxid
wurden wie in Beispiel 2 mit 148 Teilen Wasser gemischt. Die Masse erhärtete nach 1.5 Stunden. Nach 4 Stunden (d.h. 2.5 Stunden nach Erhärten) wurde eine Druckfestigkeit von 8 MPa, nach 24 Stunden (d.h. 22.5 Stunden nach Erhärten) eine Druckfestigkeit von 32 MPa und nach 28 Tagen eine Druckfestigkeit von 68 MPa gemessen.

### BEISPIEL 6

- 100 Gew.-Teile: Metakaolin aus Beispiel 2
- 190 Gew.-Teile: Calcinierter Ton aus Beispiel 4
- 80 Gew.-Teile: Dikaliumtrisilicat
- 180 Gew.-Teile: Hochofen-Schlacke
- 20 Gew.-Teile: Kaliumhydroxid
wurden wie in Beispiel 2 mit 138 Teilen Wasser gemischt. Die Masse erhärtete nach 70 Minuten. Nach 4 Stunden (d.h. 3 Stunden nach Erhärten) wurde eine Druckfestigkeit von 15 MPa, nach 24 Stunden (d.h. 22.5 Stunden nach Erhärten) eine Druckfestigkeit von 29 Pa und nach 28 Tagen eine Druckfestigkeit von 78 MPa gemessen.

### BEISPIEL 7

100 Teile Smectit (bestehend aus Montmorillonit, Vermiculit, Illit, Spuren von Chlorit und Kaolinit, Quarz, Tridymit) wurden in 500 ml 10% Schrnefelsäure bei 60°C eine halbe Stunde gerührt, der Rückstand abfiltriert, gewaschen und bei 110°C getrocknet. Die chemische Analyse ergab 95 % SiO₂-Gehalt, Rest Wasser. Die Korngrösse des Materials lag zwischen 0.01 und 1 µm.

### BEISPIEL 8

- 100 Gew.-Teile: Metakaolin aus Beispiel 2
- 140 Gew.-Teile: Calcinierter Ton aus Beispiel 4
- 50 Gew.-Teile: Dealuminiertes Phyllosilicat aus Beispiel 7
- 70 Gew.-Teile: Dikaliumtrisilicat
- 180 Gew.-Teile: Hochofen-Schlacke
- 30 Gew.-Teile: Kaliumhydroxid
wurden wie in Beispiel 2 mit 162 Teilen Wasser gemischt. Die Masse erhärtete nach 50 Minuten. Nach 4 Stunden (d.h. 3 Stunden nach Erhärten) wurde eine Druckfestigkeit von 19 MPa, nach 24 Stunden (d.h. 22.5 Stunden nach Erhärten) eine Druckfestigkeit von 32 Pa und nach 28 Tagen eine Druckfestigkeit von 95 MPa gemessen.

### BEISPIEL 9

- 150 Gew.-Teile: Metakaolin aus Beispiel 2
- 190 Gew.-Teile: Calcinierter Ton aus Beispiel 4
- 60 Gew.-Teile: Dealuminiertes Phyllosilicat aus Beispiel 7
- 180 Gew.-Teile: Hochofen-Schlacke
- 52 Gew.-Teile: Kaliumhydroxid
wurden wie in Beispiel 2 mit 180 Teilen Wasser gemischt. Die Masse erhärtete nach 30 Minuten. Nach 4 Stunden (d.h. 3.5 Stunden nach Erhärten) wurde eine Druckfestigkeit von 11 MPa, nach 24 Stunden (d.h. 23.5 Stunden nach Erhärten) eine Druckfestigkeit von 35 Pa und nach 28 Tagen eine Druckfestigkeit von 89 MPa gemessen.

### BEISPIEL 10

- 135 Gew.-Teile: Metakaolin aus Beispiel 2
- 60 Gew.-Teile: Dikaliumtrisilicat
- 80 Gew.-Teile: Silica fume
- 105 Gew.-Teile: Hochofen-Schlacke
- 22 Gew.-Teile: Kaliumhydroxid
wurden wie in Beispiel 2 mit 100 Teilen Wasser gemischt. Die Masse erhärtete nach 15 Minuten. Nach 4 Stunden wurde eine Druckfestigkeit von 13 MPa, nach 24 Stunden eine Druckfestigkeit von 34 MPa, nach 2 Tagen eine Druckfestigkeit von 55 MPa und nach 28 Tagen eine Druckfestigkeit von 89 MPa gemessen.

### BEISPIEL 11

Das Mörtelprisma von Beispiel 10 wurde 4 h nach der Druckfestigkeitsprüfung nach 4 Stunden noch einmal geprüft: Es wurde eine Druckfestigkeit von 6 MPa gemessen.

### BEISPIEL 12

Prüfung der Temperaturbeständigkeit:

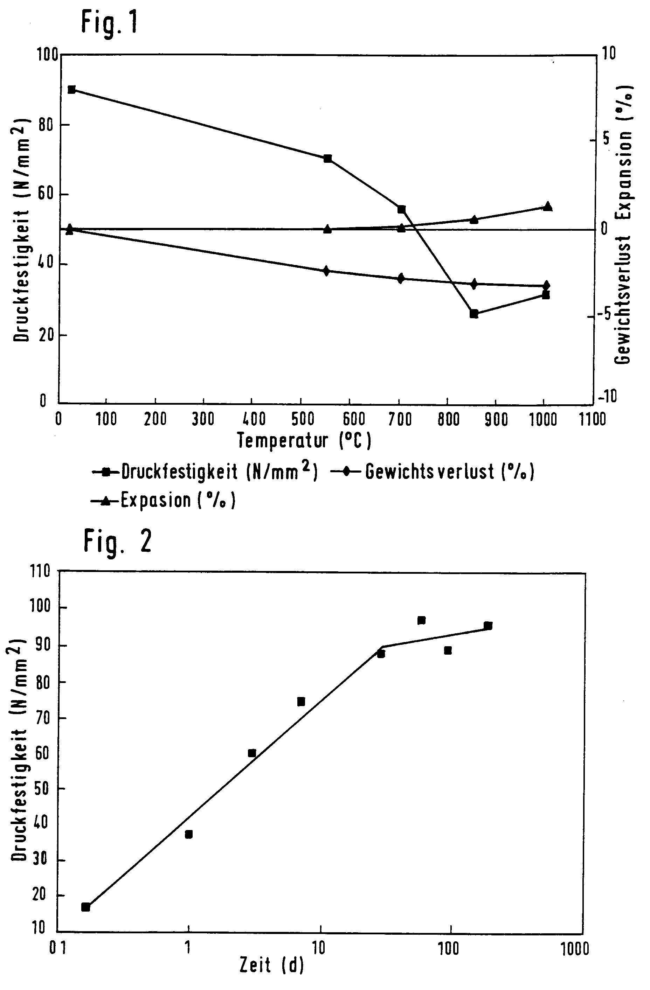

Mörtelprismen von Beispiel 10 wurden in einem Muffelofen jeweils 1 Stunde bei 550°C, 700°C, 850°C und 1000°C belassen. In Fig. 1 ist ersichtlich, dass die Proben bis 550°C keine messbare Volumenänderung zeigen, der Gewichtsverlust betrug 3 Gew.-%, der Verlust an Druckfestigkeit betrug 20 %. Der beobachtete Festigkeitsabfall oberhalb von 550°C wird durch die Phasenumwandlung des Zuschlagstoffes (Quarz) bei 570°C bewirkt. Ab 850°C nimmt die Festigkeit wieder zu. Bis 1000°C wird keine Sinterung beobachtet.

Die Bindemittelmatrix selbst ist bis 800°C stabil, ab 800°C bilden sich Oberflächenrisse. Das Kernmaterial nimmt in seiner mechanischen Festigkeit zu.

### BEISPIEL 13

Bestimmung der Porosität anhand der Aufnahme von Luft: kleiner als 4 Vol.-%.

### BEISPIEL 14

Dauerhaftigkeitsprüfungen: Die Mörtelprismen wurden wie in Beispiel 2 beschrieben, hergestellt und nach folgenden Methoden geprüft:
(i) Mechanische Beständigkeit an der Luft (Fig. 2): Die Prismen wurden bei 60 % relativer Feuchtigkeit, 20°C gelagert. Fig. 2 zeigt, dass die Druckfestigkeit und die Biegezugfestigkeit 2 Monate lang noch zunehmen und danach etwa konstant bleiben (Messbereich 6 Monate).
(ii) Für die nachstehend angeführten Prüfungen wurden die Prismen nach 28 Tagen Lagerung bei 60 %-iger Luftfeuchtigkeit und 20°C, bei 105°C bis zur Gewichtskonstanz getrocknet und mit dem jeweiligen Testmedium in Kontakt gebracht.
   - An der feuchten Luft: 95 % relative Luftfeuchtigkeit bei 20°C.
   - Stehendes Wasser: vollständiges Eintauchen der Prismen in Wasser bei 20°C.
   - Fliessendes Wasser: Die Prismen sind zur Hälfte in strömendes Wasser (10 l/h, 20°C) eingetaucht, "downstream" bezeichnet den eingetauchten Teil.
   - Sulfatresistenz: Komplettes Eintauchen in 10% K₂SO₄-Lösung bei 20°C.
   - Frost-/Tau-Zyklen: 8 Stunden vollständiges Eintauchen der Prismen in Wasser bei 20°C, dann 16 Stunden Einfrieren bei -20°C. Zyklus-Dauer: 1 Tag.
   - Feucht-/Trocken-Zyklen: 8 Stunden vollständiges Eintauchen der Prismen in Wasser bei 20°C, dann 16 Stunden Trocknen bei 105°C. Zyklus-Dauer: 1 Tag.

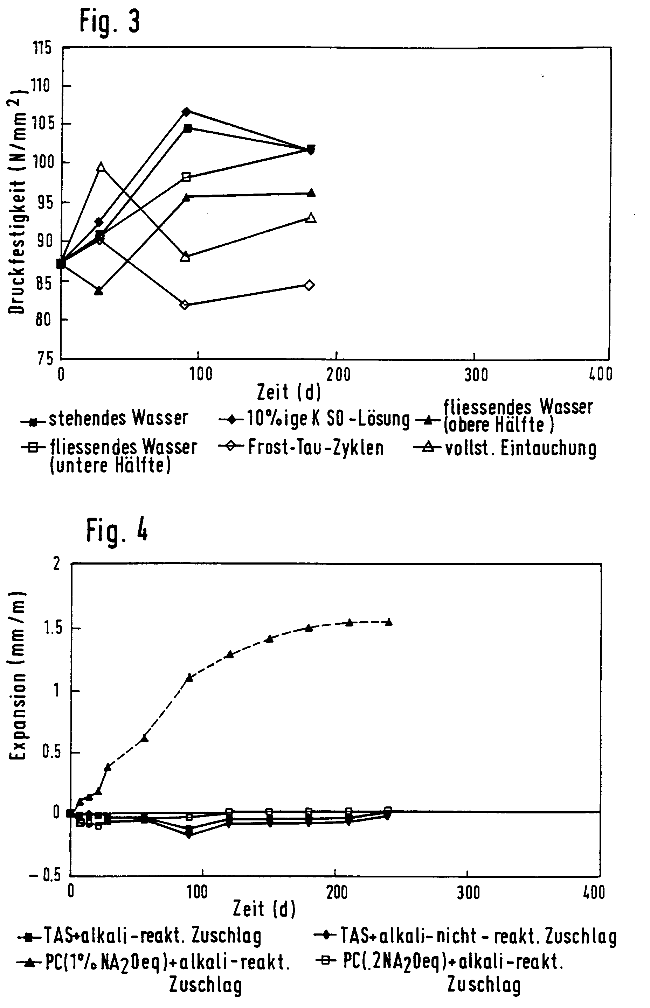

   Messfrequenz: 28 Tage, 90 Tage, 180 Tage, 360 Tage. Gemessen wurden die Druckfestigkeit sowie die chemische Zusammensetzung, die löslichen Salze und die Absorption von Wasser . Die chemische Zusammensetzung blieb unverändert bis auf Kalium: In allen Prüfungen, auch nach 180 Tagen, war der Verlust an K₂O geringer als 3 %, bezogen auf den Anfangswert. Die Absorption von Wasser (Wasseraufnahme nach der belgischen Norm NBN B15-215, 1/1989) war in allen Prüfungen geringer als 3 %.
   Aus Fig. 3 ist ersichtlich, dass in den oben angeführten Testmedien im Messzeitraum von 6 Monaten keine signifikante Verminderung der Druckfestigkeit beobachtet wurde.
(iii) Formbeständigkeitsprüfung und Prüfung der Alkali-Aggregat-Reaktion: Die Prüfung wurde nach ASTM C227, modifiziert nach VDZ, durchgeführt. Fig. 4 zeigt, dass die Tectoalumosilicat-Bindemittelmatrix nach etwa 8 Monaten nur um etwa 0,05 mm pro Meter geschrumpft ist. Trotz des hohen Alkaligehaltes im Tectoalumosilicat-Zement wurde keine Alkali-Aggregat-Reaktion beobachtet. Als Vergleich wurde das Verhalten von gewöhnlichem Portlandzement (PC) in Gegenwart von Alkalien mit Aklali-reaktiven und Aklali-nichtreaktiven Zuschlagstoffen untersucht. Man sieht eine sehr deutliche Zunahme des Volumens im Falle des Portlandzements.

### BEISPIEL 15

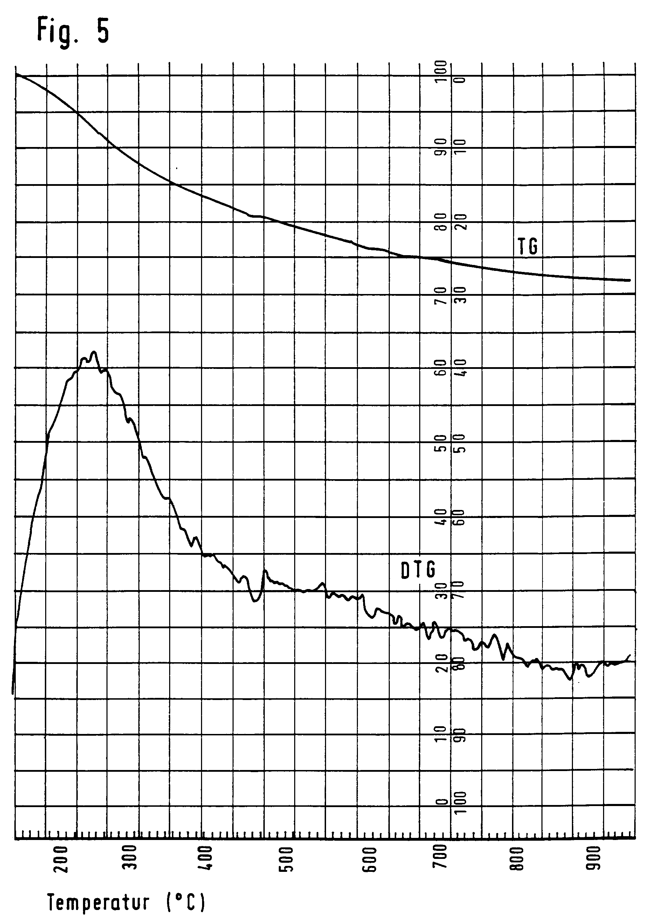

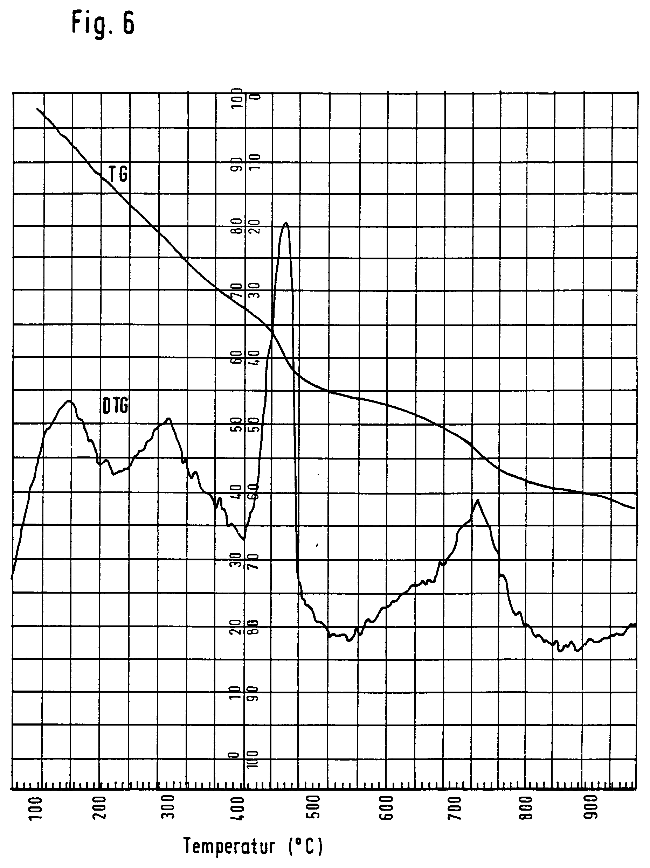

Fig. 5 zeigt oben (TG) ein thermographimetrisches und unten (DTG) ein differentialthermographimetrisches Diagramm der Bindemittelmatrix und als Vergleich dazu Zeigt Fig. 6 entsprechende Diagramme für Zementstein aus gewöhnlichem Portlandzement.

### BEISPIEL 16

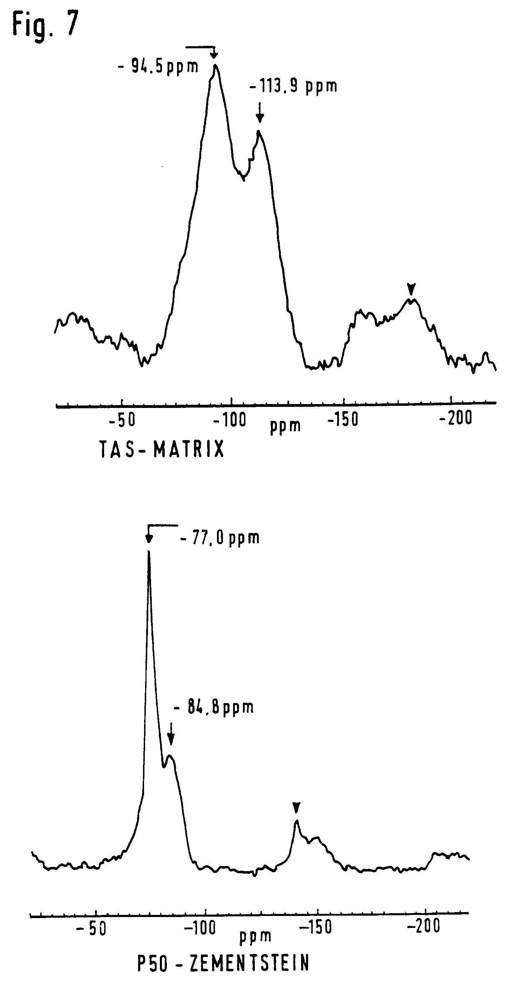

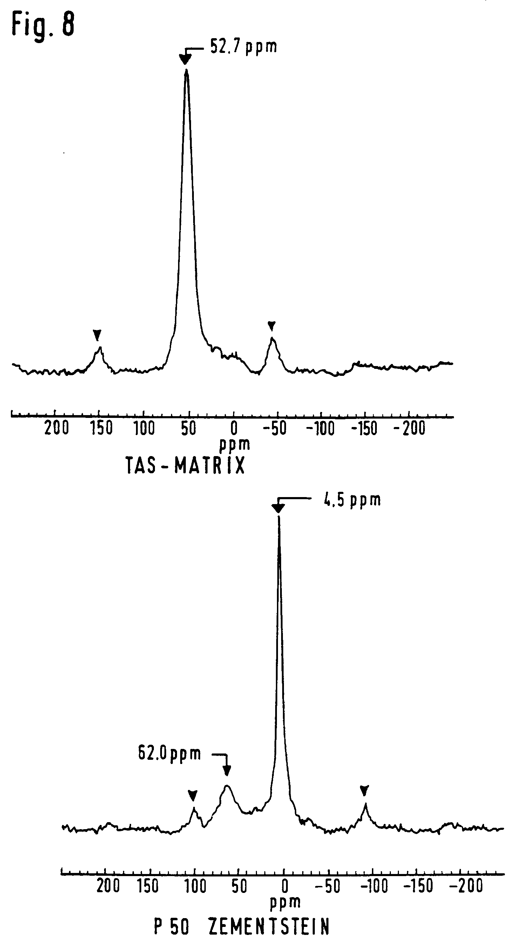

Fig. 7 zeigt ²⁹Si-MAS-NMR-Aufnahmen und Fig. 8 ²⁷Al-MAS-NMR-Aufnahmen der Tectoalumosilicat-Bindemittelmatrix und von Zementstein aus gewöhnlichem Portlandzement (P50). Es wird auf die entsprechenden Erläuterungen zu den NMR-Messungen in der vorangehenden Beschreibung verwiesen.

## Patentansprüche

1. Portlandzementfreie Bindemittelmatrix mit der Summenformel:
(Li,Na)₀₋₇K₁₋₆Mg₁₋₀Ca₃₋₀[A₁₄Si₆₋₁₄O₂₁₋₃₆] x (0-15H₂0)
und mit Tectosilicatmikrokristallen, welche sich aus einem Tectoalumosilicat-Zement, enthaltend K, Ca und Alumosilicate sowie gegebenenfalls Li, Na und Mg in einer Umsetzung mit H₂O im Verhältnis 3:1 bis 6:1 ergeben, wobei der Tectoalumosilicat-Zement gebildet ist durch
- 80 bis 140 Gewichtsteile zwischen 500°C und 900°C dehydroxyliertes Phyllosilicat,
- 40 bis 500 Gewichtsteile reaktive Silica,
- 20 bis 120 Gewichtsteile reaktives Calciumsilicatglas/Calciumalumosilicatglas mit einem Verhältnis von Ca:Si ≥ 1,
- 5 bis 60 Gewichtsteile Alkaliaktivator mit der Summenformel:
a(M₂O)* x(SiO₂)* y(H₂O)
mit M = Li, Na, K und 0 < a < = 4 sowie x = 0-5 und y = 3-20, wobei insgesamt das Verhältnis von Si:Al ≥ 1 ist.

2. Portlandzementfreie Bindemittelmatrix nach Anspruch 1, dadurch gekennzeichnet, dass das Gesamtverhältnis Si:Al ≥ 1.5 ist.

3. Portlandzementfreie Bindemittelmatrix nach einem der Ansprüche 1 oder 2, dadurch gekennzeichnet, dass der Tectoalumosilicat-Zement Alkalihydroxide enthält, insbesondere 1 bis 50 Gewichtsteile Alkalihydroxide.

4. Portlandzementfreie Bindemittelmatrix nach Anspruch 3, dadurch gekennzeichnet, dass das dehydroxylierte Phyllosilicat ein in Gegenwart von Alkalikomponenten zu Tectosilicatstrukturen führendes Metakaolin ist.

5. Portlandzementfreie Bindemittelmatrix nach einem der Ansprüche 1 bis 4, dadurch gekennzeichnet, dass die reaktive Silica dealuminiertes Phyllosilicat, eine mit Mineralsäuren dealuminierte Flugasche, eine gegebenenfalls in calcinierten Tonen enthaltene feinkörnige kristalline Form von SiO₂, ein Kieselsäuregel, ein durch Sintern eines Alumosilicates mit Alkalicarbonat bei Temperaturen zwischen 800°C und 1200°C gewonnenes thermisch Alkali-aktiviertes Alumosilicat, wobei die Komponenten Alkali und Alumosilicat im Verhältnis 1:6 bis 1:1 gemischt werden, und/oder Mikrosilica ("silica fume") ist.

6. Portlandzementfreie Bindemittelmatrix nach einem der Ansprüche 1 bis 5, dadurch gekennzeichnet, dass ein Alkaliaktivator in situ aus dem dealuminierten Phyllosilicat und/oder dealuminierter Flugasche und/oder feinkristallinen SiO₂-Formen in Gegenwart des Alkalihydroxids entsteht.

7. Portlandzementfreie Bindemittelmatrix nach einem der Ansprüche 1 bis 6, dadurch gekennzeichnet, dass der Tectoalumosilicat-Zement als reaktive Silica ein thermisch Alkali-aktiviertes Alumosilicat enthält, das durch Sintern einer Kohlekraftwerk-Flugasche mit
(Ca0 + Mg0) ≤ 10 Gew.-%
Gewichtsverhältnis SiO₂/Al₂0₃ ≥ 1.5 mit gleichen Gewichtsteilen Natriumcarbonat bei 900°C, durch Abschrecken des Sinterprodukts innerhalb von zwei Minuten auf unter 100°C und durch Mahlen auf eine Korngrösse von ≤ 15 µm erhalten wird.

8. Portlandzementfreie Bindemittelmatrix nach einem der Ansprüche 1 bis 7, dadurch gekennzeichnet, dass sie eine Porosität von ≤ 4 Vol.-% aufweist.

9. Portlandzementfreie Bindemittelmatrix nach einem der Ansprüche 1 bis 8, dadurch gekennzeichnet, dass ihre Differentialthermoanalyse ein Maximum bei etwa 250°C und eine bis etwa 1000°C auslaufende Schulter zeigt.

10. Portlandzementfreie Bindemittelmatrix nach einem der Ansprüche 1 bis 9, dadurch gekennzeichnet, dass der Tectoalumosilicat-Zement gebildet ist durch
- 100 Gewichtsteile dehydroxyliertes Phyllosilicat, insbesondere Metakaolin,
- 30 bis 50 Gewichtsteile Kaliumtrisilicat,
- 50 bis 75 Gewichtsteile amorphe Silica,
- 50 bis 80 Gewichtsteile basisches Calciumsilicat/Calciumalumosilicatglas,
- 5 bis 25 Gewichtsteile Kaliumhydroxid.

11. Portlandzementfreie Bindemittelmatrix nach einem der Ansprüche 1 bis 9, dadurch gekennzeichnet, dass der Tectoalumosilicat-Zement gebildet ist durch
- 100 Gewichtsteile dehydroxyliertes Phyllosilicat, insbesondere Metakaolin,
- 10 bis 30 Gewichtsteile Kaliumtrisilicat,
- 50 bis 75 Gewichtsteile dealuminiertes Phyllosilicat,
- 50 bis 80 Gewichtsteile basisches Calciumsilicat/Calciumalumosilicatglas,
- 5 bis 25 Gewichtsteile Kaliumhydroxid.

12. Portlandzementfreie Bindemittelmatrix nach einem der Ansprüche 1 bis 9, dadurch gekennzeichnet, dass der Tectoalumosilicat-Zement gebildet ist durch
- 100 Gewichtsteile dehydroxyliertes Phyllosilicat, insbesondere Metakaolin,
- 15 bis 50 Gewichtsteile Kaliumtrisilicat,
- 100 bis 400 Gewichtsteile thermisch Alkali-aktiviertes Alumosilicat
- 10 bis 40 Gewichtsteile amorphe Silica,
- 30 bis 80 Gewichtsteile basisches Calciumsilicat/Calciumalumosilicatglas,
- 5 bis 35 Gewichtsteile Kaliumhydroxid.

13. Portlandzementfreie Bindemittelmatrix nach einem der Ansprüche 1 bis 9, dadurch gekennzeichnet, dass der Tectoalumosilicat-Zement gebildet ist durch
- 100 Gewichtsteile dehydroxyliertes Phyllosilicat, insbesondere Metakaolin,
- 15 bis 50 Gewichtsteile Kaliumtrisilicat,
- 100 bis 400 Gewichtsteile thermisch Alkali-aktiviertes Alumosilicat,
- 10 bis 40 Gewichtsteile dealuminiertes Phyllosilicat,
- 30 bis 80 Gewichtsteile basisches Calciumsilicat/Calciumalumosilicatglas,
- 5 bis 35 Gewichtsteile Kaliumhydroxid.

14. Portlandzementfreie Bindemittelmatrix nach einem der Ansprüche 1 bis 9, dadurch gekennzeichnet, dass der Tectoalumosilicat-Zement gebildet ist durch
- 100 Gewichtsteile dehydroxyliertes Phyllosilicat, insbesondere Metakaolin,
- 20 bis 60 Gewichtsteile Kaliumtrisilicat,
- 50 bis 150 Gewichtsteile thermisch Alkali-aktiviertes Alumosilicat,
- 50 bis 100 Gewichtsteile basisches Calciumsilicat/Calciumalumosilicatglas,
- 5 bis 25 Gewichtsteile Kaliumhydroxid.

15. Portlandzementfreie Bindemittelmatrix nach einem der Ansprüche 1 bis 9, dadurch gekennzeichnet, dass der Tectoalumosilicat-Zement gebildet ist durch mindestens einen der beiden folgenden Bestandteile:
- 100 Gewichtsteile Metakaolin oder
- 0 bis 300 Gewichtsteile calcinierter sandiger Ton
sowie folgende Bestandteile:
- 0 bis 59 Gewichtsteile Silicafume,
- 0 bis 313 Gewichtsteile thermisch Alkali-aktiviertes Alumosilicat,
- 0 bis 40 Gewichtsteile dealuminiertes Phyllosilicat,
- 0 bis 80 Gewichtsteile Dikaliumtrisilicat,
- 77 bis 210 Gewichtsteile Hochofenschlacke,
- 15 bis 35 Gewichtsteile Kaliumhydroxid.

16. Verfahren zur Herstellung einer portlandzementfreien Bindemittelmatrix mit der Summenformel:
(Li,Na)₀₋₇K₁₋₆Mg₁₋₀Ca₃₋₀[A₁₄Si₆₋₁₄O₂₁₋₃₆] x (0-15H₂0)
und mit Tectosilicatmikrokristallen, welche sich aus einem Tectoalumosilicat-Zement, enthaltend K, Ca und Alumosilicate sowie gegebenenfalls Li, Na und Mg in einer Umsetzung mit H₂O im Verhältnis 3:1 bis 6:1 ergeben, gekennzeichnet durch die Verwendung eines Tectoalumosilicat-Zements, welcher gebildet ist durch
- 80 bis 140 Gewichtsteile zwischen 500°C und 900°C dehydroxyliertes Phyllosilicat,
- 40 bis 500 Gewichtsteile reaktive Silica
- 20 bis 120 Gewichtsteile reaktives Calciumsilicatglas/Calciumalumosilicatglas mit einem Verhältnis von Ca:Si ≥ 1,
- 5 bis 60 Gewichtsteile Alkaliaktivator mit der Summenformel:
a(M₂O) * x(SiO₂) * y(H₂O)
mit M = Li, Na, K und 0 < a< = 4 sowie x = 0-5 und y = 3-20, wobei insgesamt das Verhältnis von Si:Al ≥ 1 ist.

17. Verfahren nach Anspruch 10, dadurch gekennzeichnet, dass der verwendete Tectoalumosilicat-Zement folgende Zusammensetzung hat:
- 100 Gewichtsteile dehydroxyliertes Phyllosilicat, insbesondere Metakaolin,
- 30 bis 50 Gewichtsteile Kaliumtrisilicat,
- 50 bis 75 Gewichtsteile amorphe Silica,
- 50 bis 80 Gewichtsteile basisches Calciumsilicat/Calciumalumosilicatglas,
- 5 bis 25 Gewichtsteile Kaliumhydroxid.

18. Verfahren nach Anspruch 10, dadurch gekennzeichnet, dass der verwendete Tectoalumosilicat-Zement folgende Zusammensetzung hat:
- 100 Gewichtsteile dehydroxyliertes Phyllosilicat, insbesondere Metakaolin,
- 10 bis 30 Gewichtsteile Kaliumtrisilicat,
- 50 bis 75 Gewichtsteile dealuminiertes Phyllosilicat,
- 50 bis 80 Gewichtsteile basisches Calciumsilicat/Calciumalumosilicatglas,
- 5 bis 25 Gewichtsteile Kaliumhydroxid.

19. Verfahren nach Anspruch 10, dadurch gekennzeichnet, dass der verwendete Tectoalumosilicat-Zement folgende Zusammensetzung hat:
- 100 Gewichtsteile dehydroxyliertes Phyllosilicat, insbesondere Metakaolin,
- 15 bis 50 Gewichtsteile Kaliumtrisilicat,
- 100 bis 400 Gewichtsteile thermisch Alkali-aktiviertes Alumosilicat,
- 10 bis 40 Gewichtsteile amorphe Silica,
- 30 bis 80 Gewichtsteile basisches Calciumsilicat/Calciumalumosilicatglas,
- 5 bis 35 Gewichtsteile Kaliumhydroxid.

20. Verfahren nach Anspruch 10, dadurch gekennzeichnet, dass der verwendete Tectoalumosilicat-Zement folgende Zusammensetzung hat:
- 100 Gewichtsteile dehydroxyliertes Phyllosilicat, insbesondere Metakaolin,
- 15 bis 50 Gewichtsteile Kaliumtrisilicat,
- 100 bis 400 Gewichtsteile thermisch Alkali-aktiviertes Alumosilicat
- 10 bis 40 Gewichtsteile dealuminiertes Phyllosilicat,
- 30 bis 80 Gewichtsteile basisches Calciumsilicat/Calciumalumosilicatglas,
- 5 bis 35 Gewichtsteile Kaliumhydroxid.

21. Verfahren nach Anspruch 10, dadurch gekennzeichnet, dass der verwendete Tectoalumosilicat-Zement folgende Zusammensetzung hat:
- 100 Gewichtsteile dehydroxyliertes Phyllosilicat, insbesondere Metakaolin,
- 20 bis 60 Gewichtsteile Kaliumtrisilicat,
- 50 bis 150 Gewichtsteile thermisch Alkali-aktiviertes Alumosilicat,
- 50 bis 100 Gewichtsteile basisches Calciumsilicat/Calciumalumosilicatglas,
- 5 bis 25 Gewichtsteile Kaliumhydroxid.

22. Verfahren nach Anspruch 10, dadurch gekennzeichnet, dass der verwendete Tectoalumosilicat-Zement folgende Zusammensetzung hat:
mindestens einen der beiden folgenden Bestandteile:
- 100 Gewichtsteile Metakaolin oder
- 0 bis 300 Gewichtsteile calcinierter sandiger Ton
sowie folgende Bestandteile:
- 0 bis 59 Gewichtsteile Silicafume,
- 0 bis 313 Gewichtsteile thermisch Alkali-aktiviertes Alumosilicat,
- 0 bis 40 Gewichtsteile dealuminiertes Phyllosilicat,
- 0 bis 80 Gewichtsteile Dikaliumtrisilicat,
- 77 bis 210 Gewichtsteile Hochofenschlacke, - 15 bis 35 Gewichtsteile Kaliumhydroxid.

23. Tectoalumosilicat-Zement zur Herstellung der im wesentlichen portlandzementfreien Bindemittelmatrix nach einem der Ansprüche 1 bis 9, enthaltend K, Ca und Alumosilicate sowie gegebenenfalls Li, Na und Mg, gekennzeichnet durch folgende Zusammensetzung:
- 100 Gewichtsteile dehydroxyliertes Phyllosilicat, insbesondere Metakaolin,
- 30 bis 50 Gewichtsteile Kaliumtrisilicat,
- 50 bis 75 Gewichtsteile amorphe Silica,
- 50 bis 80 Gewichtsteile basisches Calciumsilicat/Calciumalumosilicatglas,
- 5 bis 25 Gewichtsteile Kaliumhydroxid.

24. Tectoalumosilicat-Zement zur Herstellung der im wesentlichen portlandzementfreien Bindemittelmatrix nach einem der Ansprüche 1 bis 9, enthaltend K, Ca und Alumosilicate sowie gegebenenfalls Li, Na und Mg, gekennzeichnet durch folgende Zusammensetzung:
- 100 Gewichtsteile dehydroxyliertes Phyllosilicat, insbesondere Metakaolin,
- 10 bis 30 Gewichtsteile Kaliumtrisilicat,
- 50 bis 75 Gewichtsteile dealuminiertes Phyllosilicat,
- 50 bis 80 Gewichtsteile basisches Calciumsilicat/Calciumalumosilicatglas,
- 5 bis 25 Gewichtsteile Kaliumhydroxid.

25. Tectoalumosilicat-Zement zur Herstellung der im wesentlichen portlandzementfreien Bindemittelmatrix nach einem der Ansprüche 1 bis 9, enthaltend K, Ca und Alumosilicate sowie gegebenenfalls Li, Na und Mg, gekennzeichnet durch folgende Zusammensetzung:
- 100 Gewichtsteile dehydroxyliertes Phyllosilicat, insbesondere Metakaolin,
- 15 bis 50 Gewichtsteile Kaliumtrisilicat,
- 100 bis 400 Gewichtsteile thermisch Alkali-aktiviertes Alumosilicat,
- 10 bis 40 Gewichtsteile amorphe Silica,
- 30 bis 80 Gewichtsteile basisches Calciumsilicat/Calciumalumosilicatglas,
- 5 bis 35 Gewichtsteile Kaliumhydroxid.

26. Tectoalumosilicat-Zement zur Herstellung der im wesentlichen portlandzementfreien Bindemittelmatrix nach einem der Ansprüche 1 bis 9, enthaltend K, Ca und Alumosilicate sowie gegebenenfalls Li, Na und Mg, gekennzeichnet durch folgende Zusammensetzung:
- 100 Gewichtsteile dehydroxyliertes Phyllosilicat, insbesondere Metakaolin,
- 15 bis 50 Gewichtsteile Kaliumtrisilicat,
- 100 bis 400 Gewichtsteile thermisch Alkali-aktiviertes Alumosilicat,
- 10 bis 40 Gewichtsteile dealuminiertes Phyllosilicat,
- 30 bis 80 Gewichtsteile basisches Calciumsilicat/Calciumalumosilicatglas,
- 5 bis 35 Gewichtsteile Kaliumhydroxid.

27. Tectoalumosilicat-Zement zur Herstellung der im wesentlichen portlandzementfreien Bindemittelmatrix nach einem der Ansprüche 1 bis 9, enthaltend K, Ca und Alumosilicate sowie gegebenenfalls Li, Na und Mg, gekennzeichnet durch folgende Zusammensetzung:
- 100 Gewichtsteile dehydroxyliertes Phyllosilicat, insbesondere Metakaolin,
- 20 bis 60 Gewichtsteile Kaliumtrisilicat,
- 50 bis 150 Gewichtsteile thermisch Alkali-aktiviertes Alumosilicat,
- 50 bis 100 Gewichtsteile basisches Calciumsilicat/Calciumalumosilicatglas,
- 5 bis 25 Gewichtsteile Kaliumhydroxid.

28. Tectoalumosilicat-Zement zur Herstellung der im wesentlichen portlandzementfreien Bindemittelmatrix nach einem der Ansprüche 1 bis 9, enthaltend K, Ca und Alumosilicate sowie gegebenenfalls Li, Na und Mg, gekennzeichnet durch folgende Zusammensetzung:
mindestens einen der beiden folgenden Bestandteile:
- 100 Gewichtsteile Metakaolin oder
- 0 bis 300 Gewichtsteile calcinierter sandiger Ton
sowie folgende Bestandteile:
- 0 bis 59 Gewichtsteile Silicafume,
- 0 bis 313 Gewichtsteile thermisch Alkali-aktiviertes Alumosilicat,
- 0 bis 40 Gewichtsteile dealuminiertes Phyllosilicat,
- 0 bis 80 Gewichtsteile Dikaliumtrisilicat,
- 77 bis 210 Gewichtsteile Hochofenschlacke,
- 15 bis 35 Gewichtsteile Kaliumhydroxid.

29. Beton mit einer portlandzementfreien Bindemittelmatrix nach einem der Ansprüche 1 bis 9 und Standardzuschlagstoffen im Verhältnis von 1:2 bis 1:3 sowie einem Verhältnis Bindemittel/Wasser von 5:1 bis 3,3:1, dadurch gekennzeichnet, dass er
- nach 15 Minuten bis 8 Stunden abbindet,
- nach 4 Stunden bei 20°C eine Druckfestigkeit von etwa 6 bis etwa 20 MPa aufweist,
- nach 24 Stunden bei 20°C eine Druckfestigkeit von etwa 14 bis etwa 40 MPa aufweist,
- nach 4 Tagen bei 20°C eine Druckfestigkeit von etwa 49 bis etwa 65 MPa aufweist, und
- nach 28 Tagen bei 20°C eine Druckfestigkeit von etwa 60 bis etwa 90 MPa aufweist.

## Claims

1. Portland-cement-free binding agent matrix having the empirical formula:
(Li,Na)₀₋₇K₁₋₆Mg₁₋₀Ca₃₋₀[A₁₄Si₆₋₁₄O₂₁₋₃₆] x (O-15H₂O)
and having tectosilicate microcrystals which are produced from a tectoaluminosilicate cement, containing K, Ca and aluminosilicates and, optionally, Li, Na and Mg in a reaction with H₂O in a ratio of from 3:1 to 6:1, the tectoaluminosilicate cement being formed by
- 80 to 140 parts by weight of phyllosilicate dehydroxylated at between 500°C and 900°C,
- 40 to 500 parts by weight of reactive silica,
- 20 to 120 parts by weight of reactive calcium silicate glass/calcium aluminosilicate glass having a ratio of Ca:Si of ≥ 1,
- 5 to 60 parts by weight of alkali activator having the empirical formula:
a(M₂O)*x(SiO₂)*y(H₂O)
with M = Li, Na, K and 0 < a < = 4 and x = 0-5 and y = 3-20, the ratio of Si:Al overall being ≥ 1.

2. Portland-cement-free binding agent matrix according to claim 1, characterised in that the total ratio of Si:Al is ≥ 1.5.

3. Portland-cement-free binding agent matrix according to either claim 1 or 2, characterised in that the tectoaluminosilicate cement contains alkali hydroxides, particularly from 1 to 50 parts by weight of alkali hydroxides.

4. Portland-cement-free binding agent matrix according to claim 3, characterised in that the dehydroxylated phyllosilicate is a metakaolin resulting in tectosilicate structures in the presence of alkali components.

5. Portland-cement-free banding agent matrix according to any one of claims 1 to 4, characterised in that the reactive silica is a dealuminised phyllosilicate, a flue ash dealuminised with mineral acids, a fine-grain crystalline form of SiO₂, which is optionally contained in calcined clays, a silica gel, a thermally alkali-activated aluminosilicate obtained by sintering an aluminosilicate with alkali carbonate at temperatures of between 800°C and 1200°C, the alkali and aluminosilicate components being mixed in a ratio of from 1:6 to 1:1, and/or microsilica ("fumed silica").

6. Portland-cement-free binding agent matrix according to any one of claims 1 to 5, characterised in that an alkali activator is produced in situ from the dealuminised phyllosilicate and/or dealuminised flue ash and/or finely crystalline SiO₂ forms in the presence of the alkali hydroxide.

7. Portland-cement-free binding agent matrix according to any one of claims 1 to 6, characterised in that the tectoaluminosilicate cement contains, as the reactive silica, a thermally alkali-activated aluminosilicate which is obtained by sintering a flue ash from a coal-fired power station having
(CaO + MgO) ≤ 10% by weight
weight ratio SiO₂/Al₂O₃ ≥ 1.5 with identical parts by weight of sodium carbonate at 900°C. by quenching the sintered product to below 100°C within two minutes and by grinding to a grain size of ≤ 15 µm.

8. Portland-cement-free binding agent matrix according to any one of claims 1 to 7, characterised in that it has a porosity of ≤ 4% by volume.

9. Portland-cement-free binding agent matrix according to any one of claims 1 to 8, characterised in that its differential thermal analysis shows a maximum level at approximately 250°C and a shoulder extending to approximately 1000°C.

10. Portland-cement-free binding agent matrix according to any one of claims 1 to 9, characterised in that the tectoaluminosillcate cement is formed by
- 100 parts by weight of dehydroxylated phyllosilicate, particularly metakaolin,
- 30 to 50 parts by weight of potassium trisilicate,
- 50 to 75 parts by weight of amorphous silica,
- 50 to 80 parts by weight of basic calcium silicate/calcium aluminosilicate glass,
- 5 to 25 parts by weight of potassium hydroxide.

11. Portland-cement-free binding agent matrix according to any one of claims 1 to 9, characterised in that the tectoaluminosilicate cement is formed by
- 100 parts by weight of dehydroxylated phyllosilicate, particularly metakaolin,
- 10 to 30 parts by weight of potassium trisilicate,
- 50 to 75 parts by weight of dealuminised phyllosilicate,
- 50 to 80 parts by weight of basic calcium silicate/calcium aluminosilicate glass,
- 5 to 25 parts by weight of potassium hydroxide.

12. Portland-cement-free binding agent matrix according to any one of claims 1 to 9, characterised in that the tectoaluminosilicate cement is formed by
- 100 parts by weight of dehydroxylated phyllosilicate, particularly metakaolin,
- 15 to 50 parts by weight of potassium trisilicate,
- 100 to 400 parts by weight of thermally alkali-activated aluminosilicate,
- 10 to 40 parts by weight of amorphous silica,
- 30 to 80 parts by weight of basic calcium silicate/calcium aluminosilicate glass,
- 5 to 35 parts by weight of potassium hydroxide.

13. Portland-cement-free binding agent matrix according to any one of claims 1 to 9, characterised in that the tectoaluminosilicate cement is formed by
- 100 parts by weight of dehydroxylated phyllosilicate, particularly metakaolin,
- 15 to 50 parts by weight of potassium trisilicate,
- 100 to 400 parts by weight of thermally alkali-activated aluminosilicate,
- 10 to 40 parts by weight of dealuminised phyllosilicate,
- 30 to 80 parts by weight of basic calcium silicate/calcium aluminosilicate glass,
- 5 to 35 parts by weight of potassium hydroxide.

14. Portland-cement-free binding agent matrix according to any one of claims 1 to 9, characterised in that the tectoaluminosilicate cement is formed by
- 100 parts by weight of dehydroxylated phyllosllicate, particularly metakaolin,
- 20 to 60 parts by weight of potassium trisilicate,
- 50 to 150 parts by weight of thermally alkali-activated aluminosilicate,
- 50 to 100 parts by weight of basic calcium silicate/calcium aluminosilicate glass,
- 5 to 25 parts by weight of potassium hydroxide.

15. Portland-cement-free binding agent matrix according to any one of claims 1 to 9, characterised in that the tectoaluminosilicate-cement is formed by at least one of the following two constituents:
- 100 parts by weight of metakaolin or
- 0 to 300 parts by weight of calcined sandy clay and the following constituents:
- 0 to 59 parts by weight of fumed silica,
- 0 to 313 parts by weight of thermally alkali-activated aluminosilicate,
- 0 to 40 parts by weight of dealuminised phyllosilicate,
- 0 to 80 parts by weight of dipotassium trisilicate,
- 77 to 210 parts by weight of blast-furnace slag,
- 15 to 35 parts by weight of potassium hydroxide.

16. Process for the preparation of a Portland-cement-free binding agent matrix having the empirical formula:
(Li,Na)₀₋₇K₁₋₆Mg₁₋₀Ca₃₋₀[A₁₄Si₆₋₁₄O₂₁₋₃₆] x (0-15H₂O)
and having tectosilicate microcrystals which are produced from a tectoaluminosilicate cement, containing K, Ca and aluminosilicates and, optionally, Li, Na and Mg in a reaction with H₂O in a ratio of from 3:1 to 6:1, characterised by the use of a tectoaluminosilicate cement which is formed by
- 80 to 140 parts by weight of phyllosilicate dehydroxylated at between 500°C and 900°C,
- 40 to 500 parts by weight of reactive silica,
- 20 to 120 parts by weight of reactive calcium silicate glass/calcium aluminosilicate glass having a ratio of Ca:Si of ≥ 1,
- 5 to 60 parts by weight of alkali activator having the empirical formula:
a(M₂O)*x(SiO₂)*y(H₂O)
with M = Li, Na, K and 0 < a<= 4 and x = 0-5 and y = 3-20, the ratio of Si:Al overall being ≥ 1.

17. Process according to claim 16, characterised in that the tectoaluminosilicate cement used has the following composition:
- 100 parts by weight of dehydroxylated phyllosilicate, particularly metakaolin,
- 30 to 50 parts by weight of potassium trisilicate,
- 50 to 75 parts by weight of amorphous silica,
- 50 to 80 parts by weight of basic calcium silicate/calcium aluminosilicate glass,
- 5 to 25 parts by weight of potassium hydroxide.

18. Process according to claim 16, characterised in that the tectoaluminosilicate cement used has the following composition:
- 100 parts by weight of dehydroxylated phyllosilicate, particularly metakaolin,
- 10 to 30 parts by weight of potassium trisilicate,
- 50 to 75 parts by weight of dealuminised phyllosilicate,
- 50 to 80 parts by weight of basic calcium silicate/calcium aluminosilicate glass,
- 5 to 25 parts by weight of potassium hydroxide.

19. Process according to claim 16, characterised in that the tectoaluminosilicate cement used has the following composition:
- 100 parts by weight of dehydroxylated phyllosilicate, particularly metakaolin,
- 15 to 50 parts by weight of potassium trisilicate,
- 100 to 400 parts by weight of thermally alkali-activated aluminosilicate,
- 10 to 40 parts by weight of amorphous silica,
- 30 to 80 parts by weight of basic calcium silicate/calcium aluminosilicate glass,
- 5 to 35 parts by weight of potassium hydroxide.

20. Process according to claim 16, characterised in that the tectoaluminosilicate cement used has the following composition:
- 100 parts by weight of dehydroxylated phyllosilicate, particularly metakaolin,
- 15 to 50 parts by weight of potassium trisilicate,
- 100 to 400 parts by weight of thermally alkali-activated aluminosilicate,
- 10 to 40 parts by weight of dealuminised phyllosilicate,
- 30 to 80 parts by weight of basic calcium silicate/calcium aluminosilicate glass,
- 5 to 35 parts by weight of potassium hydroxide.

21. Process according to claim 16, characterised in that the tectoaluminosilicate cement used has the following composition:
- 100 parts by weight of dehydroxylated phyllosilicate, particularly metakaolin,
- 20 to 60 parts by weight of potassium trisilicate,
- 50 to 150 parts by weight of thermally alkali-activated aluminosilicate,
- 50 to 100 parts by weight of basic calcium silicate/calcium aluminosilicate glass,
- 5 to 25 parts by weight of potassium hydroxide.

22. Process according to claim 16, characterised in that the tectoaluminosilicate cement used has the following composition:
at least one of the following two constituents:
- 100 parts by weight of metakaolin or
- 0 to 300 parts by weight of calcined sandy clay and the following constituents:
- 0 to 59 parts by weight of fumed silica,
- 0 to 313 parts by weight of thermally alkali-activated aluminosilicate,
- 0 to 40 parts by weight of dealuminised phyllosilicate,
- 0 to 80 parts by weight of dipotassium trisilicate,
- 77 to 210 parts by weight of blast-furnace slag,
- 15 to 35 parts by weight of potassium hydroxide.

23. Tectoaluminosilicate cement for the preparation of the substantially Portland-cement-free binding agent matrix according to any one of claims 1 to 9, containing K, Ca and aluminosilicates and, optionally, Li, Na and Mg, characterised by the following composition:
- 100 parts by weight of dehydroxylated phyllosilicate, particularly metakaolin,
- 30 to 50 parts by weight of potassium trisilicate,
- 50 to 75 parts by weight of amorphous silica,
- 50 to 80 parts by weight of basic calcium silicate/calcium aluminosilicate glass,
- 5 to 25 parts by weight of potassium hydroxide.

24. Tectoaluminosillcate cement for the preparation of the substantially Portland-cement-free binding agent matrix according to any one of claims 1 to 9, containing K, Ca and aluminosilicates and, optionally, Li, Na and Mg, characterised by the following composition:
- 100 parts by weight of dehydroxylated phyllosilicate, particularly metakaolin,
- 10 to 30 parts by weight of potassium trisilicate,
- 50 to 75 parts by weight of dealuminised phyllosilicate,
- 50 to 80 parts by weight of basic calcium silicate/calcium aluminosilicate glass,
- 5 to 25 parts by weight of potassium hydroxide.

25. Tectoaluminosilicate cement for the preparation of the substantially Portland-cement-free binding agent matrix according to any one of claims 1 to 9, containing K, Ca and aluminosilicates and, optionally, Li, Na and Mg, characterised by the following composition:
- 100 parts by weight of dehydroxylated phyllosilicate, particularly metakaolin,
- 15 to 50 parts by weight of potassium trisilicate,
- 100 to 400 parts by weight of thermally alkali-activated aluminosilicate,
- 10 to 40 parts by weight of amorphous silica,
- 30 to 80 parts by weight of basic calcium silicate/calcium aluminosilicate glass,
- 5 to 35 parts by weight of potassium hydroxide.

26. Tectoaluminosilicate cement for the preparation of the substantially Portland-cement-free binding agent matrix according to any one of claims 1 to 9, containing K, Ca and aluminosilicates and, optionally, Li, Na and Mg, characterised by the following composition:
- 100 parts by weight of dehydroxylated phyllosilicate, particularly metakaolin,
- 15 to 50 parts by weight of potassium trisilicate,
- 100 to 400 parts by weight of thermally alkali-activated aluminosilicate,
- 10 to 40 parts by weight of dealuminised phyllosilicate,
- 30 to 80 parts by weight of basic calcium silicate/calcium aluminosilicate glass,
- 5 to 35 parts by weight of potassium hydroxide.

27. Tectoaluminosilicate cement for the preparation or the substantially Portland-cement-free binding agent matrix according to any one of claims 1 to 9, containing K, Ca and aluminosilicates and, optionally, Li, Na and Mg, characterised by the following composition:
- 100 parts by weight of dehydroxylated phyllosilicate, particularly metakaolin,
- 20 to 60 parts by weight of potassium trisilicate,
- 50 to 150 parts by weight of thermally alkali-activated aluminosilicate,
- 50 to 100 parts by weight of basic calcium silicate/calcium aluminosilicate glass,
- 5 to 25 parts by weight of potassium hydroxide.

28. Tectoaluminosilicate cement for the preparation of the substantially Portland-cement-free binding agent matrix according to any one of claims 1 to 9, containing K, Ca and aluminosilicates and, optionally, Li, Na and Mg, characterised by the following composition:
at least one of the following two constituents:
- 100 parts by weight of metakaolin or
- 0 to 300 parts by weight of calcined sandy clay and the following constituents:
- 0 to 59 parts by weight of fumed silica,
- 0 to 313 parts by weight of thermally alkali-activated aluminosilicate,
- 0 to 40 parts by weight of dealuminised phyllosilicate,
- 0 to 80 parts by weight of dipotassium trisilicate,
- 77 to 210 parts by weight of blast-furnace slag,
- 15 to 35 parts by weight of potassium hydroxide.

29. Concrete having a Portland-cement-free binding agent matrix according to any one of claims 1 to 9 and standard aggregates in a ratio of from 1:2 to 1:3 and a ratio of binding agent/water of from 5:1 to 3.3:1, characterised in that it
- sets after from 15 minutes to 8 hours,
- has a compression strength of from approximately 6 to approximately 20 MPa after 4 hours at 20°C,
- has a compression strength of from approximately 14 to approximately 40 MPa after 24 hours at 20°C,
- has a compression strength of from approximately 49 to approximately 65 MPa after 4 days at 20°C and
- has a compression strength of from approximately 60 to approximately 90 MPa after 28 days at 20°C.

## Revendications

1. Matrice de liant exempte de ciment Portland répondant à la formule brute :
(Li,Na)_{0.7}K₁₋₆Mg₁₋₀Ca₃₋₀[A₁₄Si₆₋₁₄0₂₁₋₃₆]x(0-15H₂0)
et comportant des microcristaux de tectosilicate qui résultent d'un ciment de tectoaluminosilicate, contenant K, Ca et des aluminosilicates ainsi qu'éventuellement Li, Na et Mg en une réaction avec H₂0 dans Le rapport de 3:1 a 6:1, le ciment de tectoaluminosilicate étant constitué de
- 80 à 140 parties en poids de phyllosilicate désydroxylé entre 500°C et 900°C,
- 40 à 500 parties en poids de silice réactive,
- 20 à 120 parties en poids de verre de silicate de calcium/verre d'aluminosilicate de calcium réactif avec un rapport Ca:Si ≥ 1,
- 5 à 60 parties en poids d'activateur alcalin de formule brute :
a(M₂O)*x(SiO₂)*y(H₂O)
avec M = Li, Na et K et O<a< = 4 ainsi que x = 0-5 et y = 3-20, où le rapport Si:Al est globalement ≤ 1.

2. Matrice de liant exempte de ciment Portland selon la revendication 1, caractérisée en ce que rapport global Si:Al est ≥ 1.

3. Matrice de liant exempte de ciment Portland selon l'une des revendications 1 ou 2, caractérisée en ce que le ciment de tectoaluminosilicate contient des hydroxydes alcalins, en particulier 1 à 50 parties en poids d'hydroxydes alcalins.

4. Matrice de liant exempte de ciment Portland selon la revendication 3, caractérisée en ce que le phyllosilicate déshydroxylé est un métakaolin conduisant à des structures de tectosilicate en présence de composants alcalins.

5. Matrice de liant exempte de ciment Portland selon l'une des revendications 1 à 4, caractérisée en ce que la silice réactive est du phyllosilicate désaluminé, des cendres volantes désaluminées avec des acides minéraux, une forme de SiO₂ cristalline à grains fins éventuellement contenue dans des argiles calcinées, un gel de silice, un aluminosilicate activé thermiquement par un alcali obtenu par frittage d'un aluminosilicate avec un carbonate alcalin à des températures entre 800°C et 1200°C, les composants alcali et aluminosilicate étant mélangés dans le rapport de 1:6 à 1:1, et/ou de la microsilice ("fumée de silice").

6. Matrice de liant exempte de ciment Portland selon l'une des revendications 1 à 5, caractérisée en ce qu'un activateur alcalin se forme in situ à partir du phyllosilicate désaluminé et/ou des cendres volantes désaluminées et/ou de formes de SiO₂ finement cristallisées en présence de l'hydroxyde alcalin.

7. Matrice de liant exempte de ciment Portland selon l'une des revendications 1 à 6, caractérisée en ce que le ciment de tectoaluminosilicate contient comme silice réactive un aluminosilicate activé thermiquement par un alcali qui est obtenu par frittage à 900°C de cendres volantes d'une centrale thermique avec
(CaO + MgO)≤ 10% en poids
rapport pondéral de SiO₂/Al₂O₃ ≥ 1,5 avec des parties en poids égales de carbonate de sodium, trempe du produit fritté jusqu'en dessous de 100°C en l'espace de deux minutes et broyage jusqu'à une grosseur de grain ≤ 15µm.

8. Matrice de liant exempte de ciment Portland selon l'une des revendications 1 à 7, caractérisée en ce qu'elle affiche une porosité ≤ 4% en volume.

9. Matrice de liant exempte de ciment Portland selon l'une des revendications 1 à 8, caractérisée en ce que son analyse thermique différentielle présente un maximum à environ 250°C et un épaulement s'étendant jusqu'à environ 1000°C.

10. Matrice de liant exempte de ciment Portland selon l'une des revendications 1 à 9, caractérisée en ce que le ciment de tectoaluminosilicate est constitué de
- 100 parties en poids de phyllosilicate déshydroxylé, notamment de métakaolin,
- 30 à 50 parties en poids de trisilicate de potassium,
- 50 à 75 parties en poids de silice amorphe,
- 50 à 80 parties en poids de silicate de calcium basique/verre d'aluminosilicate de calcium,
- 5 à 25 parties en poids d'hydroxyde de potassium.

11. Matrice de liant exempte de ciment Portland selon l'une des revendications 1 à 9 caractérisée en ce que le ciment de tectoaluminosilicate est constitué de
- 100 parties en poids de phyllosilicate déshydroxylé, notamment de métakaolin,
- 10 à 30 parties en poids de trisilicate de potassium,
- 50 à 75 parties en poids de phyllosilicate désaluminé,
- 50 à 80 parties en poids de silicate de calcium basique/verre d'aluminosilicate de calcium,
- 5 à 25 parties en poids d'hydroxyde de potassium.

12. Matrice de liant exempte de ciment Portland selon l'une des revendications 1 à 9, caractérisée en ce que le ciment de tectoaluminosilicate est constitué de
- 100 parties en poids de phyllosilicate déshydroxylé, notamment de métakaolin,
- 15 à 50 parties en poids de trisilicate de potassium,
- 100 à 400 parties en poids d'aluminosilicate activé thermiquement par un alcali,
- 10 à 40 parties en poids de silice amorphe,
- 30 à 80 parties en poids de silicate de calcium basique/verre d'aluminosilicate de calcium,
- 5 à 35 parties en poids d'hydroxyde de potassium.

13. Matrice de liant exempte de ciment Portland selon l'une des revendications 1 à 9, caractérisée en ce que le ciment de tectoaluminosilicate est constitué de
- 100 parties en poids de phyllosilicate déshydroxylé, notamment de métakaolin,
- 15 à 50 parties en poids de trisilicate de potassium,
- 100 à 400 parties en poids d'aluminosilicate activé thermiquement par un alcali,
- 10 à 40 parties en poids de phyllosilicate désaluminé,
- 30 à 80 parties en poids de silicate de calcium basique/verre d'alluminosilicate de calcium,
- 5 à 35 parties en poids d'hydroxyde de potassium.

14. Matrice de liant exempte de ciment Portland selon l'une des revendications 1 a 9, caractérisée en ce que le ciment de tectoaluminosilicate est constitué de
- 100 parties en poids de phyllosilicate déshydroxylé, notamment de métakaolin,
- 20 à 60 parties en poids de trisilicate de potassium,
- 50 à 150 parties en poids d'aluminosilicate activé thermiquement par un alcali,
- 50 à 100 parties en poids de silicate de calcium basique/verre d'aluminosilicate de calcium,
- 5 à 25 parties en poids d'hydroxyde de potassium.

15. Matrice de liant exempte de ciment Portland selon l'une des revendications 1 à 9, caracterisée en ce que le ciment de tectoaluminosilicate est constitué par au moins un des deux composants suivants:
- 100 parties en poids de métakaolin ou
- 0 à 300 parties en poids d'argile sableuse calcinée ainsi que par les composants suivants :
- 0 à 59 parties en poids de fumée de silice,
- 0 à 313 parties en poids d'aluminosilicate activé thermiquement par un alcali,
- 0 à 40 parties en poids de phyllosilicate désaluminé,
- 0 à 80 parties en poids de trisilicate dipotassique,
- 77 à 210 parties en poids de laitier de haut fourneau,
- 15 à 35 parties en poids d'hydroxyde de potassium.

16. Procedé pour la production d'une matrice de liant exempte de ciment Portland répondant à la formule brute :
(Li,Na)₀₋₇K₁₋₆Mg₁₋₀Ca₃₋₀[A₁₄Si₆₋₁₄0₂₁₋₃₆]x(0-15H₂0)
et comportant des microcristaux de tectosilicate qui résultent d'un ciment de tectoaluminosilicate, contenant K, Ca et des aluminosilicates ainsi qu'éventuellement Li, Na et Mg en une réaction avec H₂0 dans le rapport de 3:1 à 6:1, caractérisé par l'emploi d'un ciment de tectoaluminosilicate qui est constitué de
- 80 à 140 parties en poids de phyllosilicate désydroxylé entre 500°C et 900°C,
- 40 à 500 parties en poids de silice réactive,
- 20 à 120 parties en poids de verre de silicate de calcium/verre d'aluminosilicate de calcium réactif avec un rapport Ca:Si≥ 1,
- 5 à 60 parties en poids d'activateur alcalin de formule brute :
a(M₂O)*x(SiO₂)*y(H₂O)
avec M = Li, Na et K et O<a< = 4 ainsi que x = 0-5 et y = 3-20, où le rapport Si:Al est globalement ≥ 1.

17. Procédé selon la revendication 16, caractérisé en ce que le ciment de tectoaluminate a la composition suivante:
- 100 parties en poids de phyllosilicate déshydroxylé, notamment de métakaolin,
- 30 à 50 parties en poids de trisilicate de potassium,
- 50 à 75 parties en poids de silice amorphe,
- 50 à 80 parties en poids de silicate de calcium basique/verre d'aluminosilicate de calcium,
- 5 à 25 parties en poids d'hydroxyde de potassium.

18. Procédé selon la revendication 16, caractérisé en ce que le ciment de tectoaluminate a la composition suivante:
- 100 parties en poids de phyllosilicate déshydroxylé, notamment de métakaolin,
- 10 à 30 parties en poids de trisilicate de potassium,
- 50 à 75 parties en poids de phyllosilicate désaluminé,
- 50 à 80 parties en poids de silicate de calcium basique/verre à l'aluminosilicate de calcium,
- 5 à 25 parties en poids d'hydroxyde de potassium.

19. Procédé selon la revendication 16, caractérisé en ce que le ciment de tectoaluminate a la composition suivante:
- 100 parties en poids de phyllosilicate déshydroxylé, notamment de métakaolin,
- 15 à 50 parties en poids de trisilicate de potassium,
- 100 à 400 parties en poids d'aluminosilicate activé thermiquement par un alcali,
- 10 à 40 parties en poids de silice amorphe,
- 30 à 80 parties en poids de silicate de calcium basique/verre d'aluminosilicate de calcium,
- 5 à 35 parties en poids d'hydroxyde de potassium.

20. Procédé selon la revendication 16, caractérisé en ce que le ciment de tectoaluminate a la composition suivante:
- 100 parties en poids de phyllosilicate déshydroxylé, notamment de métakaolin,
- 15 à 50 parties en poids de trisilicate de potassium,
- 100 à 400 parties en poids d'aluminosilicate activé thermiquement par un alcali,
- 10 à 40 parties en poids de phyllosilicate désaluminé,
- 30 à 80 parties en poids de silicate de calcium basique/verre à l'aluminosilicate de calcium,
- 5 à 35 parties en poids d'hydroxyde de potassium.

21. Procédé selon la revendication 16, caractérisé en ce que le ciment de tectoaluminate a la composition suivante :
- 100 parties en poids de phyllosilicate déshydroxylé, notamment de métakaolin,
- 20 à 60 parties en poids de trisilicate de potassium,
- 50 à 150 parties d'aluminosilicate activé thermiquement par un alcali,
- 50 à 100 parties en poids de silicate de calcium basique/verre d'aluminosilicate de calcium.
- 5 à 25 parties en poids d'hydroxyde de potassium.

22. Procédé selon la revendication 16, caractérisé en ce que le ciment de tectoaluminate a la composition suivante:
au moins un des deux composants suivants:
- 100 parties en poids de métakaolin ou
- 0 à 300 parties en poids d'argile sableuse calcinée
ainsi que les composants suivants :
- 0 à 59 parties en poids de fumée de silice,
- 0 à 313 parties en poids d'aluminosilicate activé thermiquement par un alcali,
- 0 à 40 parties en poids de phyllosilicate désaluminé.
- 0 à 80 parties en poids de trisilicate dipotassique.
- 77 à 210 parties en poids de laitier de haut fourneau,
- 15 à 35 parties en poids d'hydroxyde de potassium.

23. Ciment de tectoaluminate pour la production de la matrice de liant sensiblement exempte de ciment Portland selon l'une des revendications 1 à 9, contenant K, Ca et des aluminosilicates ainsi qu'éventuellement Li, Na et Mg, caractérisé par la composition suivante:
- 100 parties en poids de phyllosilicate déshydroxylé, notamment de métakaolin,
- 30 à 50 parties en poids de trisilicate de potassium,
- 50 à 75 parties en poids de silice amorphe,
- 50 à 80 parties en poids de silicate de calcium basique/verre d'aluminosilicate de calcium,
- 5 à 25 parties en poids d'hydroxyde de potassium.

24. Ciment de tectoaluminate pour la production de la matrice de liant sensiblement exempte de ciment Portland selon l'une des revendications 1 à 9, contenant K, Ca et des aluminosilicates ainsi qu'éventuellement Li, Na et Mg, caractérisé par la composition suivante:
- 100 parties en poids de phyllosilicate déshydroxylé, notamment de métakaolin,
- 10 à 30 parties en poids de trisilicate de potassium,
- 50 à 75 parties en poids de phyllosilicate désaluminé,
- 50 à 80 parties en poids de silicate de calcium basique/verre d'alluminosilicate de calcium,
- 5 à 25 parties en poids d'hydroxyde de potassium.

25. Ciment de tectoaluminate pour la production de la matrice de liant sensiblement exempte de ciment Portland selon l'une des revendications 1 à 9, contenant K, Ca et des alluminosilicates ainsi qu'éventuellement Li, Na et Mg, caractérisé par la composition suivante :
- 100 parties en poids de phyllosilicate déshydroxylé, notamment de métakaolin,
- 15 à 50 parties en poids de trisilicate de potassium,
- 100 à 400 parties d'aluminosilicate activé thermiquement par un alcali,
- 10 à 40 parties en poids de silice amorphe,
- 30 à 80 parties en poids de silicate de calcium basique/verre d'aluminosilicate de calcium,
- 5 à 35 parties en poids d'hydroxyde de potassium.

26. Ciment de tectoaluminate pour la production de la matrice de liant sensiblement exempte de ciment Portland selon l'une des revendications 1 à 9, contenant K, Ca et des aluminosilicates ainsi qu'éventuellement Li, Na et Mg, caractérisé par la composition suivante:
- 100 parties en poids de phyllosilicate déshydroxylé, notamment de métakaolin,
- 15 à 50 parties en poids de trisilicate de potassium,
- 100 à 400 parties en poids d'aluminosilicate activé thermiquement par un alcali,
- 10 à 40 parties en poids de phyllosilicate désaluminé,
- 30 à 80 parties en poids de silicate de calcium basique/verre d'aluminosilicate de calcium,
- 5 à 35 parties en poids d'hydroxyde de potassium.

27. Ciment de tectoaluminate pour la production de la matrice de liant sensiblement exempte de ciment Portland selon l'une des revendications 1 à 9, contenant K, Ca et des aluminosilicates ainsi qu'éventuellement Li, Na et Mg, caractérisé par la composition suivante:
- 100 parties en poids de phyllosilicate déshydroxylé, notamment de métakaolin,
- 20 à 60 parties en poids de trisilicate de potassium,
- 50 à 150 parties en poids d'aluminosilicate activé thermiquement par un alcali,
- 50 à 100 parties en poids de silicate de calcium basique/verre d'aluminosilicate de calcium,
- 5 à 25 parties en poids d'hydroxyde de potassium.

28. Ciment de tectoaluminate pour la production de la matrice de liant sensiblement exempte de ciment Portland selon l'une des revendications 1 à 9, contenant K, Ca et des aluminosilicates ainsi qu'éventuellement Li, Na et Mg, caractérisé par la composition suivante:
- 100 parties en poids de métakaolin ou
- 0 à 300 parties en poids d'argile sableuse calcinée ainsi que par les composants suivants :
- 0 à 59 parties en poids de fumée de silice,
- 0 à 313 parties en poids d'aluminosilicate activé thermiquement par un alcali,
- 0 à 40 parties en poids de phyllosilicate désaluminé,
- 0 à 80 parties en poids de trisilicate dipotassique,
- 77 à 210 parties en poids de laitier de haut fourneau,
- 15 à 35 parties en poids d'hydroxyde de potassium.

29. Béton avec une matrice de liant exempte de ciment Portland selon l'une des revendications 1 à 9 et des adjuvants standard dans le rapport de 1:2 à 1:3 ainsi qu'avec un rapport liant/eau de 5:1 à 3,3:1, caractérisé en ce que
- il fait prise après 15 minutes à 8 heures,
- affiche après 4 heures à 20°C une résistance à la compression d'environ 6 à environ 20 MPa,
- affiche après 24 heures à 20°C une résistance à la compression d'environ 14 à environ 40 MPa,
- affiche après 4 jours à 20°C une résistance à la compression d'environ 49 à environ 65 MPa et
- affiche après 28 jours à 20°C une résistance à la compression d'environ 60 à environ 90 MPa.
